# EUROPEAN PATENT APPLICATION

(11) **EP 4 807 180 A1**
(43) Date of publication of application: **16.09.2026**
(21) Application number: 24888725.9
(22) Date of filing: 06.11.2024
(51) Int. Cl.: F04B 9/02, F16H 25/24

(54) **HYDRAULIC PRESSURE GENERATION DEVICE AND HYDRAULIC PRESSURE OPERATION DEVICE**

(30) Priority: 06.11.2023 JP 2023189183; 06.11.2023 JP 2023189184
(71) Applicant: NSK Ltd., Tokyo 141-8560 (JP)
(72) Inventor: KAWAI, Ruito, Fujisawa-shi, Kanagawa 251-8501 (JP)
(74) Representative: Grünecker Patent- und Rechtsanwälte PartG mbB
(86) International application number: PCT/JP2024/039392
(87) International publication number: WO 2025/100431

(57) **Abstract**

This hydraulic pressure generation device comprises: a hollow housing provided with a cylinder chamber into which hydraulic oil can be injected; a screw shaft in which a male screw groove is formed; a nut which is supported in the housing so as to be movable in the axial direction and in which a female screw groove is formed; a plurality of balls accommodated in a rolling path which is formed by the male screw groove and the female screw groove that oppose one another; and a piston which is slidably disposed in the cylinder chamber and connected to the nut. By rotating the screw shaft, the piston moves in the axial direction together with the nut to increase or decrease the volume of the space in which the hydraulic oil can be stored in the cylinder chamber.

## Description

### TECHNICAL FIELD

The present invention relates to a hydraulic pressure generation device and a hydraulic pressure operation device.

### BACKGROUND ART

In a hydraulic equipment including a hydraulic cylinder, a hydraulic pump is generally used as a drive source for generating a hydraulic pressure. Meanwhile, in recent years, an air hydraulic booster that generates a hydraulic pressure using a pneumatic pressure as shown in Patent Literature 1 has been widely used.

The hydraulic cylinder is a device that displaces a piston in a cylinder by a hydraulic pressure generated in the cylinder and strokes a member connected to the piston to generate an output. In a general hydraulic cylinder, a hydraulic pump is generally used as a drive source for generating the hydraulic pressure. Meanwhile, as shown in Patent Literature 2, a fluid pressure device that generates a hydraulic pressure by combining a motor and a ball screw has also been developed.

The fluid pressure device disclosed in Patent Literature 2 includes an actuator having a first pressure chamber and a second pressure chamber; a first fluid pressure control cylinder connected to the first pressure chamber of the actuator and having a first plunger driven by an electric motor; a second fluid pressure control cylinder connected to the second pressure chamber of the actuator and having a second plunger driven by the electric motor; and a fluid pressure control unit for operating the first plunger and the second plunger independently or simultaneously to move forward and backward in opposite directions to supply and discharge a working fluid to and from the actuator. The first plunger and the second plunger each include a servomotor and a ball screw controlled by the fluid pressure control unit.

### CITATION LIST

### PATENT LITERATURE

Patent Literature 1: JP2018-076877A
Patent Literature 2: JPH11-270503A

### SUMMARY OF INVENTION

### TECHNICAL PROBLEM

However, the air hydraulic booster as disclosed in Patent Literature 1 requires an air compressor for generating a pneumatic pressure, an electromagnetic valve for controlling the air compressor, a pipe for pneumatically feeding, and the like, and thus has a problem of a relatively large configuration. Further, the air hydraulic booster has an essential problem that it takes time to generate a hydraulic pressure due to compressibility of air.

A hydraulic pressure generation device according to the present disclosure has been made in view of such problems, and an object of the present disclosure is to provide a hydraulic pressure generation device capable of shortening a time until a hydraulic pressure is generated while having a relatively small configuration.

In Patent Literature 2, the actuator includes a cylinder, a piston disposed to be interposed between the first pressure chamber and the second pressure chamber in the cylinder and displaceable in an axial direction, and a rod coupled to the piston. The rod extends in the axial direction from the piston to an outside of the cylinder through one of the pressure chambers. Therefore, a cross-sectional area of the pressure chamber on a rod side in a direction orthogonal to an axis is smaller than that of the pressure chamber on a rod opposite side by an amount of a cross-sectional area of the rod in the direction orthogonal to the axis.

In order to displace the piston in the axial direction, it is necessary to supply a working fluid to one of the pressure chambers and discharge the working fluid from the other pressure chamber. However, since the cross-sectional area of the pressure chamber on the rod side in the direction orthogonal to the axis is smaller than the cross-sectional area of the pressure chamber on the rod opposite side in the direction orthogonal to the axis, when the piston is displaced in the axial direction, an amount of the working fluid supplied to and discharged from the pressure chamber on the rod side needs to be smaller than an amount of the working fluid supplied to and discharged from the pressure chamber on the rod opposite side.

Therefore, in the fluid pressure device of Patent Literature 2, by adjusting rotation speeds of the two servomotors by the fluid pressure control unit, the amount of the working fluid supplied to and discharged from the pressure chamber on the rod side at the time of piston displacement can be made smaller than the amount of the working fluid supplied to and discharged from the pressure chamber on the rod opposite side. However, according to such a technique, control on the servomotors is complicated, and a sensor for detecting a pressure of each of the pressure chambers is required in order to realize particularly accurate control. Further, since two expensive servomotors are also required, there is a problem that costs are significantly increased.

The hydraulic pressure operation device according to the present disclosure is made in view of such problems, and an object of the present disclosure is to provide a motor-driven hydraulic pressure operation device that is relatively low in cost and has s simple configuration.

### SOLUTION TO PROBLEM

A hydraulic pressure generation device of the present disclosure includes:
a hollow housing having a cylinder chamber configured to allow hydraulic oil to be injected thereto;
a screw shaft in which a male screw groove is formed;
a nut which is supported movably in an axial direction in the housing and in which a female screw groove is formed;
a plurality of balls accommodated in a rolling path formed by the male screw groove and the female screw groove facing each other; and
a piston slidably disposed in the cylinder chamber and coupled to the nut, and
by rotating the screw shaft, the piston moves in the axial direction together with the nut to increase or decrease a volume of a space in the cylinder chamber capable of storing the hydraulic oil.

A hydraulic pressure operation device of the present disclosure includes:
the above hydraulic pressure generation device;
a drive device;
a motor; and
a drive system,
the hydraulic pressure generation device includes a first hydraulic pressure generation device and a second hydraulic pressure generation device,
the first hydraulic pressure generation device includes:
   a hollow first housing having a first cylinder chamber configured to allow hydraulic oil to be injected thereto,
   a first ball screw including a screw shaft having a male screw groove, a nut having a female screw groove, and a plurality of balls capable of rolling along a rolling path between the male screw groove and the female screw groove, and
   a first piston slidably disposed in the first cylinder chamber and coupled to the nut of the first ball screw,
the second hydraulic pressure generation device includes:
   a hollow second housing having a second cylinder chamber configured to allow the hydraulic oil to be injected thereto,
   a second ball screw including a screw shaft having a male screw groove, a nut having a female screw groove, and a plurality of balls capable of rolling along a rolling path between the male screw groove and the female screw groove, and
   a second piston slidably disposed in the second cylinder chamber and coupled to the nut of the second ball screw,
the drive device includes:
   a cylindrical case,
   a first pressure chamber in the case connected to the first cylinder chamber,
   a second pressure chamber in the case connected to the second cylinder chamber,
   a drive piston partitioning the first pressure chamber and the second pressure chamber from each other, and
   a drive rod extending in an axial direction from the drive piston through the second pressure chamber,
the screw shaft of the first ball screw and the screw shaft of the second ball screw have a common axis, and the first cylinder chamber and the second cylinder chamber are disposed to face each other,
by transmitting a rotary force of the motor to the screw shaft of the first ball screw and the screw shaft of the second ball screw via the drive system, the nut of the first ball screw and the first piston and the nut of the second ball screw and the second piston are displaceable in the same direction with respect to the first cylinder chamber and the second cylinder chamber, respectively, and
a lead of each of the female screw groove and the male screw groove of the first ball screw is smaller than a lead of each of the female screw groove and the male screw groove of the second ball screw by a predetermined value.

A hydraulic pressure operation device of the present disclosure includes:
a drive device;
a motor; and
a drive system,
the hydraulic pressure generation device includes a first hydraulic pressure generation device and a second hydraulic pressure generation device,
the first hydraulic pressure generation device includes:
   a hollow first housing having a first cylinder chamber configured to allow hydraulic oil to be injected thereto,
   a first ball screw including a screw shaft having a male screw groove, a nut having a female screw groove, and a plurality of balls capable of rolling along a rolling path between the male screw groove and the female screw groove, and
   a first piston slidably disposed in the first cylinder chamber and coupled to the nut of the first ball screw,
the second hydraulic pressure generation device includes:
   a hollow second housing having a second cylinder chamber configured to allow the hydraulic oil to be injected thereto,
   a second ball screw including a screw shaft having a male screw groove, a nut having a female screw groove, and a plurality of balls capable of rolling along a rolling path between the male screw groove and the female screw groove, and
   a second piston slidably disposed in the second cylinder chamber and coupled to the nut of the second ball screw,
the drive device includes:
   a cylindrical case,
   a first pressure chamber in the case connected to the first cylinder chamber,
   a second pressure chamber in the case connected to the second cylinder chamber,
   a drive piston partitioning the first pressure chamber and the second pressure chamber from each other, and
   a drive rod extending in an axial direction from the drive piston through the second pressure chamber,
the screw shaft of the first ball screw and the screw shaft of the second ball screw have a common axis, and the first cylinder chamber and the second cylinder chamber are disposed to face each other,
by transmitting a rotary force of the motor to the screw shaft of the first ball screw and the screw shaft of the second ball screw via the drive system, the nut of the first ball screw and the first piston and the nut of the second ball screw and the second piston are displaceable in the same direction with respect to the first cylinder chamber and the second cylinder chamber, respectively,
the drive system includes a first belt coupling a pulley coupled to a rotary shaft of the motor and a pulley coupled to the screw shaft of the first ball screw and a second belt coupling a pulley coupled to the rotary shaft of the motor and a pulley coupled to the screw shaft of the second ball screw, and
a pulley ratio between the two pulleys engaged with the first belt is smaller than a pulley ratio between the two pulleys engaged with the second belt by a predetermined value.

### ADVANTAGEOUS EFFECTS OF INVENTION

According to the hydraulic pressure generation device of the present disclosure, it is possible to provide a hydraulic pressure generation device capable of shortening a time until a hydraulic pressure is generated while having a relatively small configuration.

According to the hydraulic pressure operation device of the present disclosure, it is possible to provide a motor-driven hydraulic pressure operation device that is relatively low in cost and has a simple configuration.

### BRIEF DESCRIPTION OF DRAWINGS

[FIG. 1A] FIG. 1A is an axial cross-sectional view of a hydraulic pressure generation device according to a first embodiment.
[FIG. 1B] FIG. 1B is an axial cross-sectional view of a hydraulic pressure generation device according to a modification.
[FIG. 2A] FIG. 2A is an axial cross-sectional view of a hydraulic pressure generation device according to a second embodiment.
[FIG. 2B] FIG. 2B is an axial cross-sectional view of a hydraulic pressure generation device according to a modification.
[FIG. 3A] FIG. 3A is an axial cross-sectional view of a hydraulic pressure generation device according to a third embodiment.
[FIG. 3B] FIG. 3B is an axial cross-sectional view of a hydraulic pressure generation device according to a modification.
[FIG. 4A] FIG. 4A is an axial cross-sectional view of a hydraulic pressure operation device according to the first embodiment.
[FIG. 4B] FIG. 4B is an axial cross-sectional view of a hydraulic pressure operation device according to a first modification.
[FIG. 4C] FIG. 4C is an axial cross-sectional view of a hydraulic pressure operation device according to a second modification.
[FIG. 5A] FIG. 5A is an axial cross-sectional view of a hydraulic pressure operation device according to a second embodiment.
[FIG. 5B] FIG. 5B is an axial cross-sectional view of a hydraulic pressure operation device according to a first modification.
[FIG. 5C] FIG. 5C is an axial cross-sectional view of a hydraulic pressure operation device according to a second modification.

### DESCRIPTION OF EMBODIMENTS

Hereinafter, embodiments of a hydraulic pressure generation device according to the present disclosure will be described with reference to the drawings.

### (Hydraulic Pressure Generation Device According to First Embodiment)

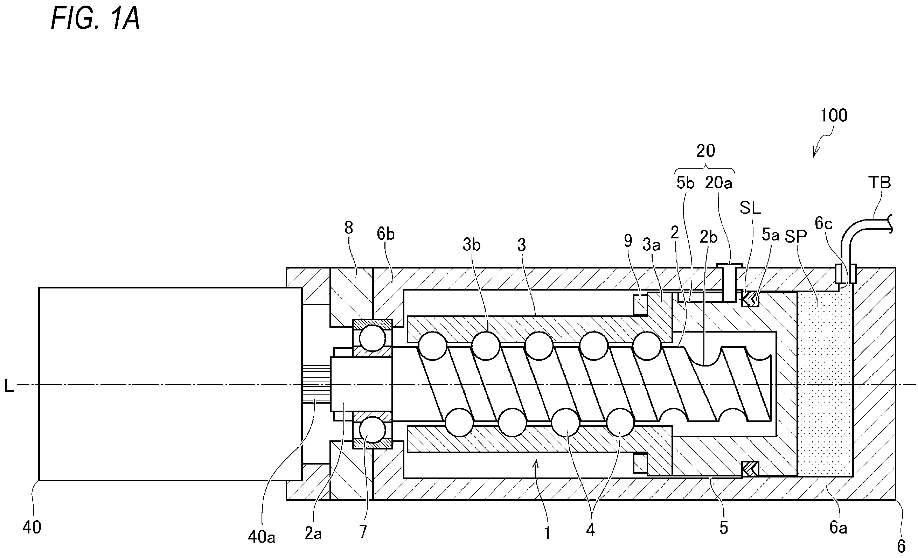

FIG. 1A is an axial cross-sectional view of a hydraulic pressure generation device according to a first embodiment.

A hydraulic pressure generation device 100 of the present embodiment includes a ball screw 1 used for converting rotational motion of an electric motor 40 serving as a drive source into linear motion of a piston 5. It is assumed that an axis of the ball screw 1 is L.

The hydraulic pressure generation device 100 of the present embodiment includes the ball screw 1 including a screw shaft 2, a nut 3, and a plurality of balls 4; the piston 5; a bottomed cylindrical hollow housing 6 having a cylinder chamber 6a; a rotation prevention device 20; and the electric motor 40. The housing 6 has a bottomed tube shape, and has an inward flange portion 6b on an opening end side. The inward flange portion 6b is formed separately from the housing 6, and is attached to an opening end of the housing 6 using bolts or the like after the piston 5 and the nut 3 are inserted into the housing 6.

The screw shaft 2 is rotatably supported by the housing 6 via a ball bearing 7. More specifically, an inner ring of the ball bearing 7 is press-fitted to a cylindrical shaft portion 2a extending in an axial direction from the screw shaft 2. An outer ring of the ball bearing 7 is fixed to the inward flange portion 6b, which is formed at an end portion of the housing 6, by a bearing holder 8 attached to the inward flange portion 6b. Since the opening end of the housing 6 is sealed by the ball bearing 7, foreign matters can be prevented from entering the housing 6 from outside. Instead of the ball bearing 7, any rolling bearing such as a roller bearing may be used. The electric motor 40 is fixed to the housing 6 to face the inward flange portion 6b, using the bearing holder 8.

An opening having spline grooves on an inner periphery thereof is formed at an end portion of the cylindrical shaft portion 2a, and a spline shaft 40a, which is a rotary shaft of the electric motor 40, is inserted into the opening to be engaged with the spline grooves. Therefore, when the electric motor 40 rotationally drives the spline shaft 40a, the screw shaft 2 rotates integrally therewith.

The screw shaft 2 is disposed coaxially with the nut 3 while being inserted into the nut 3 disposed inside the housing 6. In the ball screw 1 of the present embodiment, the nut 3 is used as a linear motion component. Therefore, the nut 3 is prevented from rotating relative to the housing 6 by the rotation prevention device 20. The rotation prevention device 20 includes a pin 20a protruding from an outer periphery toward an inner periphery of the housing 6, and a linear groove 5b formed in an outer periphery of the piston 5 and parallel to the axis L. After the piston 5 is disposed in the housing 6, the pin 20a can be inserted into a hole of the housing 6 while adjusting a phase, and an inner end thereof can be engaged with the linear groove 5b. Thus, the piston 5 can move relative to the housing 6 in the axis L direction, but is prevented from rotating relative thereto.

The nut 3 faces the inward flange portion 6b of the housing 6 and has an outward flange portion 3a at a distal end portion thereof. Coupling tools 9 such as bolts used for coupling to the piston 5 are attached to the outward flange portion 3a.

A female screw groove 3b is formed on an inner periphery of the nut 3, a male screw groove 2b is formed on an outer periphery of the screw shaft 2, and the plurality of balls 4 are rollably accommodated in a spiral rolling groove formed between the female screw groove 3b and the male screw groove 2b. When the screw shaft 2 and the nut 3 are relatively rotated, the balls 4 that have reached one end of a rolling path are returned to the other end of the rolling path via a circulation path which is not shown. Thus, the relative rotation between the screw shaft 2 and the nut 3 is continuously performed. In the present embodiment, a tube type, a coma type, an end deflector type, an end cap type, or the like can be adopted as a circulation method of the balls 4, and these are known techniques, and thus description thereof will be omitted.

The piston 5 has a bottomed cylindrical shape and is disposed axially slidably in the cylinder chamber 6a. Outer diameters of the piston 5 and the outward flange portion 3a of the nut 3 are slightly smaller than an inner diameter of the housing 6. The outward flange portion 3a of the nut 3 is connected to an opening end of the piston 5 via the coupling tools 9, and thereby the piston 5 moves linearly together with the nut 3. The screw shaft 2 extends inside the piston 5. A circumferential groove 5a is formed in an outer periphery of the piston 5 near a bottom wall thereof. An annular seal member SL is disposed in the circumferential groove 5a to seal between the outer periphery of the piston 5 and the inner periphery of the housing 6. A space surrounded by an end portion of the piston 5 on a bottom wall side and the inner periphery and a bottom wall of the housing 6 constitutes a variable volume space SP capable of storing hydraulic oil in the cylinder chamber 6a. That is, a part of an internal space of the housing 6 serves as the cylinder chamber 6a, and at least a part of the cylinder chamber 6a serves as the variable volume space SP whose volume increases or decreases in response to a displacement of the piston 5.

An opening 6c is formed to establish communication between an outside of the housing 6 and the variable volume space SP. A pipe TB connected to an external hydraulic equipment which is not shown is connected to the opening 6c.

### <Description of Operation of Hydraulic pressure generation device>

It is assumed that the hydraulic oil is injected into the variable volume space SP. When the electric motor 40 rotates the spline shaft 40a under control of a control device which is not shown, the screw shaft 2 rotates integrally with the spline shaft 40a. Thus, the nut 3, which is prevented from rotating relative to the housing 6 by the rotation prevention device 20, linearly moves rightward in FIG. 1A together with the piston 5 inside the cylinder chamber 6a. Since the volume of the variable volume space SP is reduced due to the movement of the piston 5 toward the bottom wall of the housing 6, the hydraulic oil in the variable volume space SP is discharged through the opening 6c and pressure-fed to the hydraulic equipment which is not shown through the pipe TB.

Meanwhile, when the electric motor 40 reversely rotates the spline shaft 40a under the control of the control device which is not shown, the piston 5 moves leftward in FIG. 1A, thus the volume of the variable volume space SP is increased, and the external hydraulic oil is sucked into the variable volume space SP through the opening 6c and the pipe TB.

According to the present embodiment, since the hydraulic pressure is generated by rotating the screw shaft 2 of the ball screw 1 using the electric motor 40, and linearly moving the piston 5 to reduce the volume of the variable volume space SP, only devices and wiring for driving and controlling the electric motor 40 are sufficient as necessary devices, and the hydraulic pressure generation device 100 can be reduced in size and cost.

Further, in the present embodiment, since the ball screw 1 is directly driven by the operation of the electric motor 40, there is also an advantage that a time until the hydraulic pressure is generated is short. The reason is that, since a structure is adopted in which the screw shaft 2 is rotated and the nut 3 connected to the piston 5 is linearly moved, a moment of inertia can be suppressed to be small as compared with a case where the nut 3 is rotated, and thus the time until the hydraulic pressure is generated can be shortened.

The hydraulic pressure generation device 100 of the present embodiment (and embodiments to be described later) is preferably used for driving a hydraulic cylinder, and is particularly suitable for a hydraulic cylinder with a small amount of oil and a short stroke. A related-art hydraulic device using a hydraulic pump-based hydraulic pressure generating means requires devices such as a valve for switching the hydraulic pressure and a pressure regulating valve for regulating an operating speed and an oil pressure of a cylinder. Meanwhile, in the hydraulic pressure generation device 100 of the present embodiment (and embodiments to be described later), since a movement speed and a stroke of the piston can be easily changed, and a speed and a pressure of the hydraulic cylinder can be adjusted by changing a piston stroke of the hydraulic pressure generation device 100, a component configuration of the hydraulic device can be simplified.

The hydraulic pressure generation device 100 of the present embodiment (and embodiments to be described later) can supply the hydraulic pressure to one of the hydraulic cylinders and is suitable for use in a single-acting cylinder, but can also be used in a double-acting hydraulic cylinder. When used in the double-acting hydraulic cylinder, the hydraulic pressure generation device 100 of the present embodiment (and embodiments to be described later) may be connected to each of the pressure chambers with the piston of the hydraulic cylinder which is not shown interposed therebetween. Alternatively, the hydraulic pressure generation device 100 of the present embodiment (and the embodiment to be described later) may be connected to one pressure chamber to supply the hydraulic pressure, a pneumatic pressure may be supplied to the other pressure chamber by pneumatic pressure pipe or the like to make the position of the cylinder operated by the hydraulic pressure generation device 100 return by the pneumatic pressure.

The screw shaft 2 of the ball screw 1 used in the hydraulic pressure generation device 100 of the present embodiment (and embodiments to be described later) may have a hollow shape in order to shorten a time from a start of the operation to generation of the hydraulic pressure (inertia reduction by weight reduction).

In the present embodiment (and embodiments to be described later), the single row deep groove ball bearing 7 is used to support the screw shaft 2, but the number and type of bearings can be appropriately changed as long as a load of the screw shaft 2 in the axial direction and a radial direction can be supported. For example, two angular ball bearings may be used in a face-to-face or back-to-back manner. Alternatively, two tapered roller bearings may be used in a face-to-face or back-to-back manner.

### (Hydraulic Pressure Generation Device According to Modification)

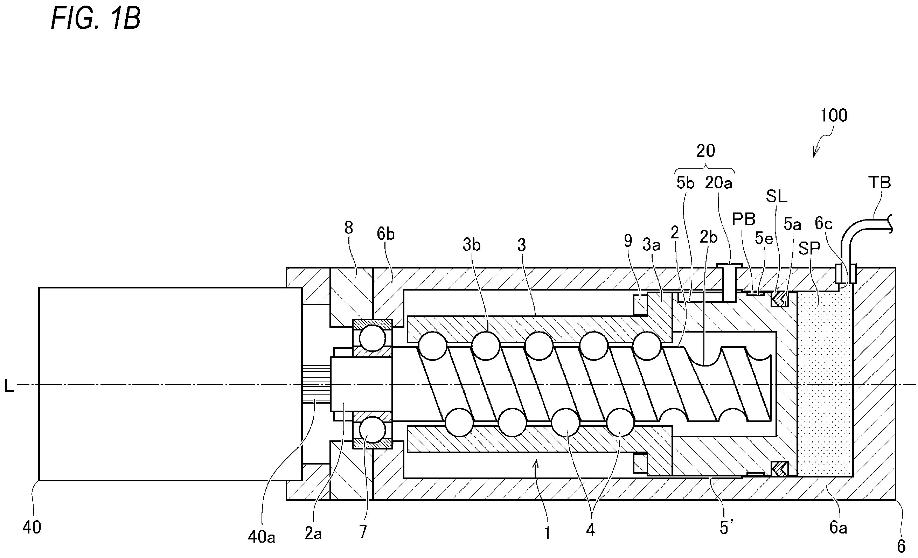

FIG. 1B is an axial cross-sectional view of a hydraulic pressure generation device according to a modification of the first embodiment. The present modification is different from the embodiment of FIG. 1A in that a shallow circumferential groove 5e is formed in an outer peripheral surface between the circumferential groove 5a and the linear groove 5b of a piston 5', and a slide bearing PB is disposed in the circumferential groove 5e. Other configurations are the same as those of the first embodiment, and thus redundant description will be omitted.

The slide bearing PB is a thin cylindrical component that is attached to the circumferential groove 5e formed in the outer peripheral surface of the piston 5' and provided to be in sliding contact with an inner peripheral surface of the housing 6, and implements sliding with low friction. By providing the slide bearing PB, there is an effect of preventing the outer peripheral surface of the piston 5' and the inner peripheral surface of the housing 6 from directly sliding and causing wear on both surfaces. As a material of the slide bearing PB, a metal material or a resin material that is softer than the piston 5' and the housing 6 and has good slidability can be appropriately used. As the metal material, copper alloy such as brass, aluminum alloy, white metal, or the like can be used, and as the resin material, PTFE, epoxy resin, polyacetal, nylon, polyethylene, phenol resin, or the like can be used. The slide bearing PB is preferably attached near a variable volume space SP side of the piston 5'. Further, the slide bearing PB may be configured to be attached to each of a plurality of circumferential grooves formed separately in the axial direction of the piston 5'.

### (Hydraulic Pressure Generation Device According to Second Embodiment)

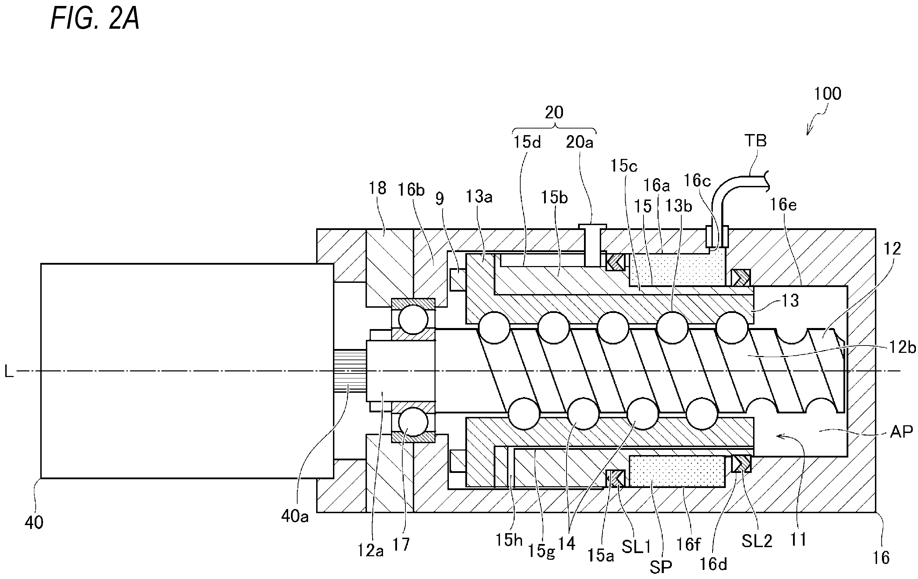

FIG. 2A is an axial cross-sectional view of a hydraulic pressure generation device according to a second embodiment.

The hydraulic pressure generation device 100 of the present embodiment includes the ball screw 11 used for converting rotational motion of the electric motor 40 serving as a drive source into linear motion of the piston 15. It is assumed that an axis of the ball screw 11 is L.

The hydraulic pressure generation device 100 of the present embodiment includes the ball screw 11 including a screw shaft 12, a nut 13, and a plurality of balls 14; a piston 15; a bottomed cylindrical hollow housing 16 having a cylinder chamber 16a; the rotation prevention device 20; and the electric motor 40. The housing 16 of the present embodiment has a bottomed tube shape, and includes a diameter-enlarged cylindrical portion 16f in which the cylinder chamber 16a is formed and a diameter-reduced cylindrical portion 16e having an inner diameter smaller than that of the diameter-enlarged cylindrical portion 16f, which are arranged adjacently in the axial direction. An inward flange portion 16b is disposed at an opening end adjacent to the diameter-enlarged cylindrical portion 16f. The inward flange portion 16b is formed separately from the housing 16, and is attached to an opening end of the housing 16 using bolts or the like after the piston 15 and the nut 13 are inserted into the housing 16.

The screw shaft 12 is rotatably supported by the housing 16 via a ball bearing 17. More specifically, an inner ring of the ball bearing 17 is press-fitted to a cylindrical shaft portion 12a extending in the axial direction from the screw shaft 12, and an outer ring of the ball bearing 17 is fixed to the inward flange portion 16b formed at an end portion of the housing 16 by a bearing holder 18 attached to the inward flange portion 16b. Since the opening end of the housing 16 is sealed by the ball bearing 17, foreign matters can be prevented from entering the housing 16 from outside. Instead of the ball bearing 17, any rolling bearing such as a roller bearing may be used. The electric motor 40 is fixed to the housing 16 to face the inward flange portion 16b, using the bearing holder 18.

An opening having spline grooves on an inner periphery thereof is formed at an end portion of the cylindrical shaft portion 12a, and the spline shaft 40a, which is the rotary shaft of the electric motor 40, is inserted into the opening to be engaged with the spline grooves. Therefore, when the electric motor 40 rotationally drives the spline shaft 40a, the screw shaft 12 rotates integrally therewith.

The screw shaft 12 is disposed coaxially with the nut 13 while being inserted into the nut 13 disposed inside the housing 16. The nut 13 is prevented from rotating relative to the housing 16 by the rotation prevention device 20. The rotation prevention device 20 includes the pin 20a protruding from an outer periphery toward an inner periphery of the housing 16, and a linear groove 15d formed in an outer periphery of the piston 15 and parallel to the axis L. After the piston 15 is disposed in the housing 16, the pin 20a can be inserted into a hole of the housing 16 while adjusting a phase, and an inner end thereof can be engaged with the linear groove 15d. Thus, the piston 15 can move relative to the housing 16 in the axis L direction, but is prevented from rotating relative thereto.

The nut 13 faces the inward flange portion 16b of the housing 16 and has an outward flange portion 13a at a proximal end portion thereof. Coupling tools 19 such as bolts used for coupling to the piston 15 are attached to the outward flange portion 13a.

A female screw groove 13b is formed in an inner periphery of the nut 13, a male screw groove 12b is formed in an outer periphery of the screw shaft 12, and the plurality of balls 14 are rollably accommodated in a spiral rolling groove formed between the female screw groove 13b and the male screw groove 12b. When the screw shaft 12 and the nut 13 are relatively rotated, the balls 14 that have reached one end of a rolling path are returned to the other end of the rolling path via a circulation path which is not shown. Thus, the relative rotation between the screw shaft 12 and the nut 13 is continuously performed. In the present embodiment, a tube type, a coma type, an end deflector type, an end cap type, or the like can also be adopted as a circulation type of the balls 14.

The piston 15 is continuously provided with a thin cylindrical portion 15c and a thick cylindrical portion 15b that is thicker than the thin cylindrical portion 15c and is disposed coaxially and continuously thereto. The thick cylindrical portion 15b is disposed radially inside the diameter-enlarged cylindrical portion 16f, an outer diameter of the thick cylindrical portion 15b is equal to or slightly smaller than an inner diameter of the diameter-enlarged cylindrical portion 16f, and an outer diameter of the outward flange portion 13a of the nut 13 is equal to or slightly smaller than the inner diameter of the diameter-enlarged cylindrical portion 16f. A part of the thin cylindrical portion 15c is disposed radially inside the diameter-reduced cylindrical portion 16e, and an outer diameter of the thin cylindrical portion 15c is equal to or slightly smaller than the inner diameter of the diameter-reduced cylindrical portion 16e. The piston 15 is disposed axially slidably in the cylinder chamber 16a together with the nut 13 in such a manner that an outer periphery of the thick cylindrical portion 15b is relatively movably fitted to an inner periphery of the diameter-enlarged cylindrical portion 16f while the thick cylindrical portion 15b is adjacent to the outward flange portion 13a, and inner peripheries of the thin cylindrical portion 15c and the thick cylindrical portion 15b are relatively non-rotatably fitted to an outer periphery of the nut 13. It is preferable that an end portion of the piston 15 on a diameter-reduced cylindrical portion 16e side and an end portion of the nut 13 on the diameter-reduced cylindrical portion 16e side coincide with each other in axial position and are flush with each other.

A circumferential groove 15a is formed in an outer periphery near an end portion of the thick cylindrical portion 15b close to the thin cylindrical portion 15c. An annular first seal member SL1 is disposed in the circumferential groove 15a. The first seal member SL1 seals between the outer periphery of the thick cylindrical portion 15b and the inner periphery of the diameter-enlarged cylindrical portion 16f of the housing 16. Meanwhile, a circumferential groove 16d is formed in an inner periphery near an end portion of the diameter-reduced cylindrical portion 16e close to the diameter-enlarged cylindrical portion 16f of the housing 16. An annular second seal member SL2 is disposed in the circumferential groove 16d. The second seal member SL2 seals between an outer periphery of the thin cylindrical portion 15c of the piston 15 and an inner periphery of the diameter-reduced cylindrical portion 16e of the housing 16. The outer periphery of the piston 15 may be provided with a seal groove, and the second seal member may be disposed therein. A space surrounded by the outer periphery of the piston 15 (thin cylindrical portion 15c) and the inner periphery of the housing 16 (diameter-enlarged cylindrical portion 16f) between the thick cylindrical portion 15b and the diameter-reduced cylindrical portion 16e separated in the axial direction constitutes the variable volume space SP capable of storing the hydraulic oil in the cylinder chamber 16a. That is, a part of an internal space of the housing 16 serves as the cylinder chamber 16a, and at least a part of the cylinder chamber 16a serves as the variable volume space SP whose volume increases or decreases in response to a displacement of the piston 15.

The piston 15 has a relief groove 15g formed in the inner peripheries of the thin cylindrical portion 15c and the thick cylindrical portion 15b and extending straight in the axis L direction, and a communication hole 15h establishing communication between the inner periphery and the outer periphery of the thick cylindrical portion 15b. One end of the relief groove 15g is open to the space in the diameter-reduced cylindrical portion 16e, and the other end of the relief groove 15g communicates with an inner end of the communication hole 15h. The relief groove 15g and the communication hole 15h constitute an air path.

An opening 16c is formed in the diameter-enlarged cylindrical portion 16f near the diameter-reduced cylindrical portion 16e to establish communication between an outside of the housing 16 and the variable volume space SP. The pipe TB connected to an external hydraulic equipment which is not shown is connected to the opening 16c.

### <Description of Operation of Hydraulic pressure generation device>

It is assumed that hydraulic oil is injected into the variable volume space SP. When the electric motor 40 rotates the spline shaft 40a under control of a control device which is not shown, the screw shaft 12 rotates integrally with the spline shaft 40a. Thus, the nut 13, which is prevented from rotating relative to the housing 16 by the rotation prevention device 20, linearly moves rightward in FIG. 2A together with the piston 15 inside the cylinder chamber 16a. At this time, the thick cylindrical portion 15b of the piston 15 slides relative to the diameter-enlarged cylindrical portion 16f, and the thin cylindrical portion 15c slides relative to the diameter-reduced cylindrical portion 16e.

Any pair of the portions may be slid. Due to the movement of the piston 15, the thick cylindrical portion 15b is displaced toward a step portion between the diameter-enlarged cylindrical portion 16f and the diameter-reduced cylindrical portion 16e, and thus the volume of the variable volume space SP is reduced, so that the hydraulic oil in the variable volume space SP is discharged through the opening 16c and pressure-fed to the hydraulic equipment which is not shown through the pipe TB.

Meanwhile, when the electric motor 40 reversely rotates the spline shaft 40a under the control of the control device which is not shown, the piston 5 moves leftward in FIG. 2A, thus the volume of the variable volume space SP is increased, and the external hydraulic oil is sucked into the variable volume space SP through the opening 16c and the pipe TB.

As well in the present embodiment, since the hydraulic pressure is generated by rotating the screw shaft 12 of the ball screw using the electric motor 40, and linearly moving the piston 15 to reduce the volume of the variable volume space SP, only devices and wiring for driving and controlling the electric motor 40 are sufficient as necessary devices, and the hydraulic pressure generation device 100 can be reduced in size and cost. Further, since a structure is adopted in which the screw shaft 12 is rotated and the nut 13 connected to the piston 15 is linearly moved, a moment of inertia can be suppressed to be small as compared with a case where the nut is rotated, and thus a time until the hydraulic pressure is generated can be shortened. Further, as is apparent from a comparison with the embodiment of FIG. 1A, an axial length of the hydraulic pressure generation device 100 can be shortened by disposing the cylinder chamber 16a radially outside the thin cylindrical portion 15c of the piston 15.

In the present embodiment, when the piston 15 strokes in the axial direction, air in an air chamber AP (in the diameter-reduced cylindrical portion 16e) is pressurized or depressurized, and thus handling of the air in the air chamber AP is a problem. According to the present embodiment, for example, when the air in the air chamber AP is pressurized, the air moves toward the ball bearing 17 through the relief groove 15g, the communication hole 15h, and a gap between the inner periphery of the housing 16 and the outer periphery of the thick cylindrical portion 15b and an outer periphery of the outward flange portion 13a. Further, when the air in the air chamber AP is depressurized, air on a ball bearing 17 side returns to the air chamber AP through the relief groove 15g and the communication hole 15h. Therefore, when the piston 15 strokes in the axial direction, resistance due to pressurization or depressurization of the air in the air chamber AP is reduced, and the piston 15 can be smoothly operated.

### (Hydraulic Pressure Generation Device According to Modification)

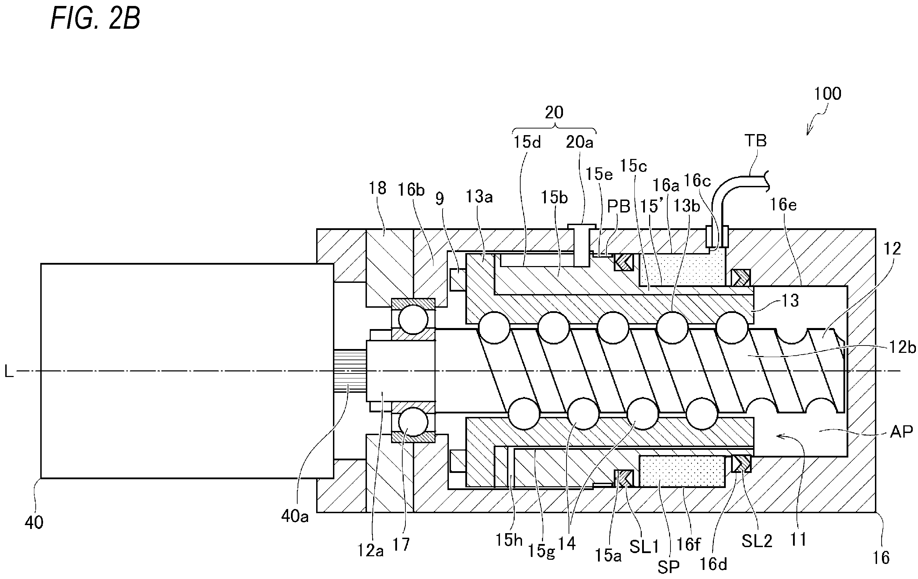

FIG. 2B is an axial cross-sectional view of the hydraulic pressure generation device 100 according to a modification of the second embodiment. The present modification is different from the embodiment of FIG. 2A in that a shallow circumferential groove 15e is formed in an outer peripheral surface between the circumferential groove 15a and the linear groove 15d of a piston 15', and the slide bearing PB is disposed in the circumferential groove 15e. Other configurations are the same as those of the second embodiment, and thus redundant description will be omitted.

The slide bearing PB is a thin cylindrical component that is attached to the circumferential groove 15e formed in the outer peripheral surface of the piston 15' and provided to be in sliding contact with an inner peripheral surface of the housing 16, and implements sliding with low friction. By providing the slide bearing PB, there is an effect of preventing the outer peripheral surface of the piston 15' and the inner peripheral surface of the housing 16 from directly sliding and causing wear on both surfaces. A material and the like of the slide bearing PB are the same as those of the above-described modification.

### (Hydraulic Pressure Generation Device According to Third Embodiment)

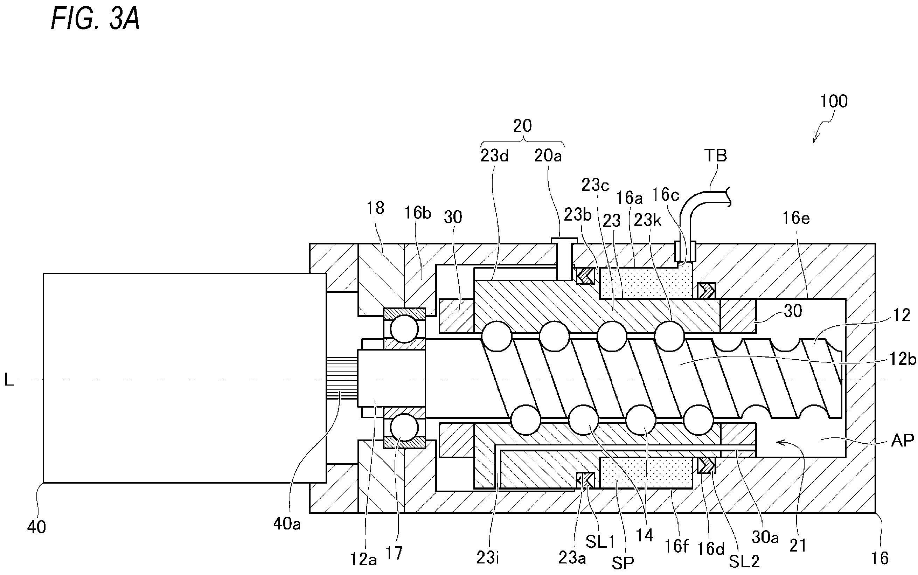

FIG. 3A is an axial cross-sectional view of a hydraulic pressure generation device according to a third embodiment.

The hydraulic pressure generation device 100 of the present embodiment is different from the second embodiment in that a piston nut 23 in which a piston and a nut are integrated is provided. That is, the hydraulic pressure generation device 100 of the present embodiment includes a ball screw 21 including the screw shaft 12, the piston nut 23, and the plurality of balls 14; the bottomed cylindrical hollow housing 16 having the cylinder chamber 16a, the rotation prevention device 20, and the electric motor 40. Since the configuration other than the piston nut 23 is the same as that of the above-described embodiment, redundant description will be partially omitted.

The piston nut 23 is continuously provided with a thin cylindrical portion 23c and a thick cylindrical portion 23b that is thicker than the thin cylindrical portion 23c and is disposed coaxially and continuously thereto. An outer diameter of the thick cylindrical portion 23b is equal to or slightly smaller than the inner diameter of the diameter-enlarged cylindrical portion 16f of the housing 16. The rotation prevention device 20 includes the pin 20a protruding from an outer periphery toward an inner periphery of the housing 16, and a linear groove 23d formed in an outer periphery of the piston nut 23 and parallel to the axis L.

A female screw groove 23k is formed in an inner periphery of the piston nut 23, the male screw groove 12b is formed in an outer periphery of the screw shaft 12, and the plurality of balls 14 are rollably accommodated in a spiral rolling groove formed between the female screw groove 23k and the male screw groove 12b.

In the present embodiment, end caps 30 are attached to both ends of the piston nut 23 as a circulation path of the balls 14. The end caps 30 have a function of returning the balls 14 rolling to an end portion along one of two through holes (not shown) penetrating along the axis L inside the piston nut 23 to an end portion of the other of the through holes. By providing the end caps 30, an outer diameter of the piston nut 23 can be reduced, and the hydraulic pressure generation device 100 narrowed in shape can be provided. End deflectors may be provided instead of the end caps 30.

A circumferential groove 23a is formed in an outer periphery near an end portion of the thick cylindrical portion 23b close to the thin cylindrical portion 23c. The annular first seal member SL1 is disposed in the circumferential groove 23a. The first seal member SL1 seals between an outer periphery of the thick cylindrical portion 23b and the inner periphery of the housing 16. Meanwhile, the circumferential groove 16d is formed in an inner periphery near an end portion of the diameter-reduced cylindrical portion 16e close to the diameter-enlarged cylindrical portion 16f of the housing 16. The annular second seal member SL2 is disposed in the circumferential groove 16d. The second seal member SL2 seals between an outer periphery of the thin cylindrical portion 23c of the piston nut 23 and the inner periphery of the housing 16. The outer periphery of the piston nut 23 may be provided with a seal groove, and the second seal member may be disposed therein. A space surrounded by the outer periphery of the piston nut 23 (thin cylindrical portion 23c) and the inner periphery of the housing 16 (diameter-enlarged cylindrical portion 16f) between the thick cylindrical portion 23b and the diameter-reduced cylindrical portion 16e separated in the axial direction constitutes the variable volume space SP capable of storing the hydraulic oil in the cylinder chamber 16a. That is, a part of an internal space of the housing 16 serves as the cylinder chamber 16a, and at least a part of the cylinder chamber 16a serves as the variable volume space SP whose volume increases or decreases in response to a displacement of the piston nut 23.

### <Description of Operation of Hydraulic pressure generation device>

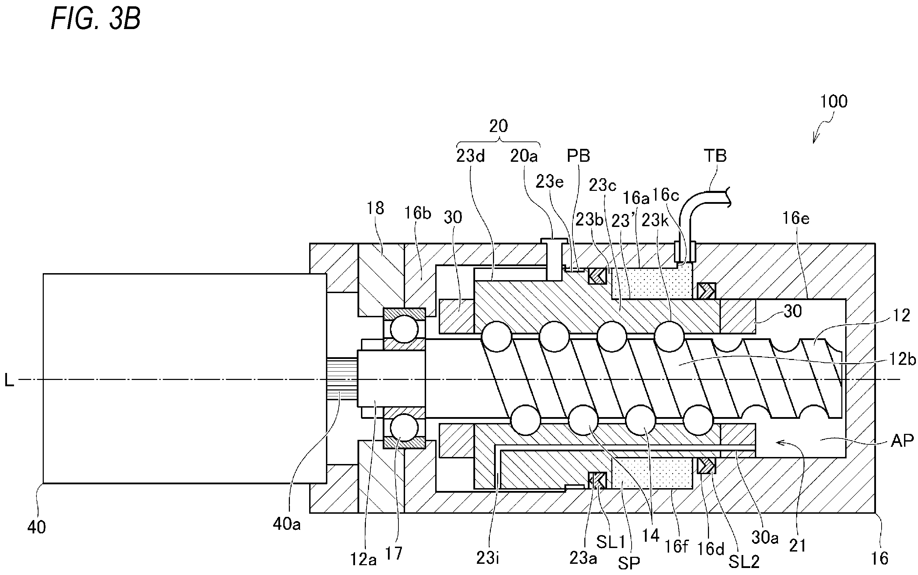

It is assumed that the hydraulic oil is injected into the variable volume space SP. When the electric motor 40 rotates the spline shaft 40a under control of a control device which is not shown, the screw shaft 12 rotates integrally with the spline shaft 40a. Thus, the piston nut 23, which is prevented from rotating relative to the housing 16 by the rotation prevention device 20, linearly moves rightward in FIG. 3 inside the cylinder chamber 16a. At this time, the thick cylindrical portion 23b of the piston nut 23 slides relative to the diameter-enlarged cylindrical portion 16f, and the thin cylindrical portion 23c slides relative to the diameter-reduced cylindrical portion 16e. Any pair of the portions may be slid. Due to the movement of the piston nut 23, the thick cylindrical portion 23b is displaced toward a step portion between the diameter-enlarged cylindrical portion 16f and the diameter-reduced cylindrical portion 16e, and thus the volume of the variable volume space SP is reduced, so that the hydraulic oil in the variable volume space SP is discharged through the opening 16c and pressure-fed to the hydraulic equipment which is not shown through the pipe TB.

Meanwhile, when the electric motor 40 reversely rotates the spline shaft 40a under the control of the control device which is not shown, the piston nut 23 moves leftward in FIG. 3A, thus the volume of the variable volume space SP is increased, and the external hydraulic oil is sucked into the variable volume space SP through the opening 16c and the pipe TB.

Here, in the present embodiment, an air path 23i establishing communication between the outer periphery of the thick cylindrical portion 23b of the piston nut 23 and an end surface of the thin cylindrical portion 23c on an air chamber side is formed. However, since the end caps 30 are attached to both ends of the piston nut 23, an opening end of the air path 23i is closed by the end caps 30. Therefore, the end cap 30 disposed in the air chamber AP is provided with, at a position not interfering with an internal circulation path, a vent hole 30a that establishes communication between an end portion on an air chamber side of the air path 23i and an outside. Thus, when the piston nut 23 strokes, air can move between the air chamber AP (inside of the diameter-reduced cylindrical portion 16e) and an outside of the piston nut 23 through the vent hole 30a and the air path 23i.

### (Hydraulic Pressure Generation Device According to Modification)

FIG. 3B is an axial cross-sectional view of a hydraulic pressure generation device according to a modification of the third embodiment. The present modification is different from the embodiment of FIG. 3A in that a shallow circumferential groove 25e is formed in an outer peripheral surface between the circumferential groove 23a and the linear groove 23d of a piston nut 23', and the slide bearing PB is disposed in the circumferential groove 25e. Other configurations are the same as those of the third embodiment, and thus redundant description will be omitted.

The slide bearing PB is a thin cylindrical component that is attached to the circumferential groove 25e formed in the outer peripheral surface of the piston nut 23' and provided to be in sliding contact with an inner peripheral surface of the housing 16, and implements sliding with low friction. By providing the slide bearing PB, there is an effect of preventing the outer peripheral surface of the piston nut 23' and the inner peripheral surface of the housing 16 from directly sliding and causing wear on both surfaces. A material and the like of the slide bearing PB are the same as those of the above-described modification.

The present invention is not limited to the above-described embodiments. Any component in the above-described embodiments can be modified within the scope of the present invention. In addition, any component in the above-described embodiments can be added or omitted. For example, instead of the spline shaft 40a, a coupling or the like may be used to connect the electric motor 40 and the screw shaft 12.

Hereinafter, embodiments of a hydraulic pressure operation device according to the present invention will be described with reference to the drawings.

### (Hydraulic Pressure Operation Device According to First Embodiment)

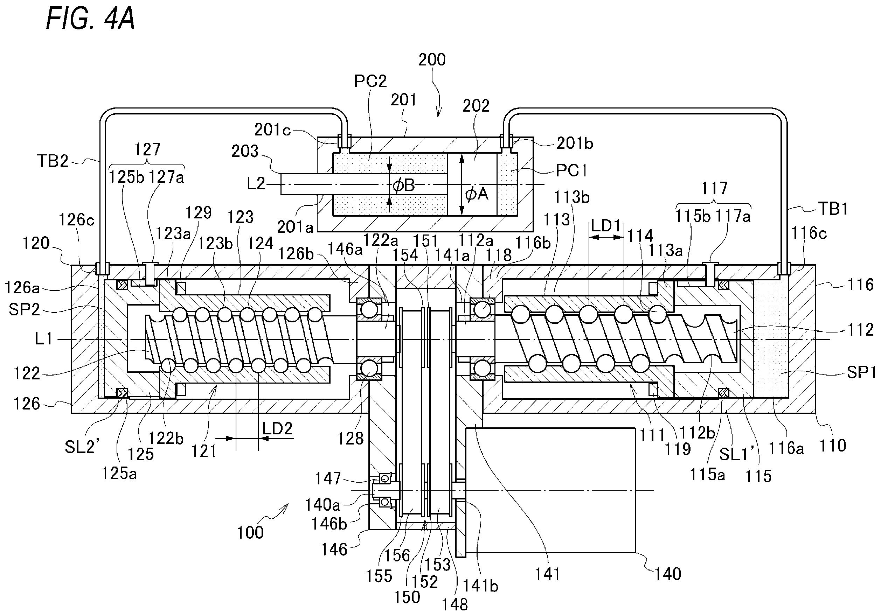

FIG. 4A is an axial cross-sectional view of a hydraulic pressure operation device according to a first embodiment.

The hydraulic pressure operation device of the present embodiment includes the hydraulic pressure generation device 100 and a drive device 200. The hydraulic pressure generation device 100 includes a first hydraulic pressure generation device 110, a second hydraulic pressure generation device 120, an electric motor 140, and a drive system 150 that transmits a rotary force of the electric motor 140 to the first hydraulic pressure generation device 110 and the second hydraulic pressure generation device 120. The first hydraulic pressure generation device 110 and the second hydraulic pressure generation device 120 have a common axis L1. Thus, a compact hydraulic pressure operation device can be provided.

### (First Hydraulic Pressure Generation Device)

The first hydraulic pressure generation device 110 includes a first ball screw 111, a first piston 115, a hollow first housing 116 including a first cylinder chamber 116a, and a rotation prevention device 117. The first ball screw 111 includes a screw shaft 112, a nut 113, and a plurality of balls 114. The first housing 116 has a bottomed tube shape, and has an inward flange portion 116b on an opening end side (left side in FIG. 4A). The inward flange portion 116b is formed separately from the first housing 116, and is attached to an opening end of the first housing 116 using bolts or the like after the first piston 115 and the nut 113 are inserted into the first housing 116.

The screw shaft 112 is rotatably supported by the first housing 116 via a first ball bearing 118. More specifically, an inner ring of the first ball bearing 118 is press-fitted to a cylindrical shaft portion 112a extending in an axial direction from the screw shaft 112. An outer ring of the first ball bearing 118 is fixed to the inward flange portion 116b by a motor holder 141 attached to the inward flange portion 116b formed at an end portion of the first housing 116. Since the opening end of the first housing 116 is closed by the first ball bearing 118, foreign matters can be prevented from entering the first housing 116 from outside. Instead of the first ball bearing 118, any rolling bearing such as a roller bearing may be used.

The motor holder 141 extends radially outward of the first ball bearing 118, and the electric motor 140 is attached thereto such that a rotation axis of the electric motor 140 is parallel to the axis L1.

A first driven pulley 151 is attached to an end portion of the cylindrical shaft portion 112a protruding from a driven-side opening 141a formed in the motor holder 141, and rotates integrally with the cylindrical shaft portion 112a.

Further, a first driving pulley 152 is attached to an end portion of a rotary shaft 140a of the electric motor 140 protruding from a driven-side opening 141b formed in the motor holder 141, and rotates integrally with the rotary shaft 140a. A first belt 153 is wound around the first driven pulley 151 and the first driving pulley 152. Therefore, a rotary force of the rotary shaft 140a is transmitted to the cylindrical shaft portion 112a, that is, the screw shaft 112 via the first driving pulley 152, the first belt 153, and the first driven pulley 151.

The screw shaft 112 is disposed coaxially with the nut 113 while being inserted into the nut 113 disposed inside the first housing 116. In the first ball screw 111 of the present embodiment, the nut 113 is used as a linear motion component. The nut 113 is prevented from rotating relative to the first housing 116 by the rotation prevention device 117. The rotation prevention device 117 includes a pin 117a protruding from an outer periphery toward an inner periphery of the first housing 116, and a linear groove 115b formed in an outer periphery of the first piston 115 and parallel to the axis L1. After the first piston 115 is disposed in the first housing 116, the pin 117a can be inserted into a hole of the first housing 116 while adjusting a phase, and an inner end thereof can be engaged with the linear groove 115b. Thus, the first piston 115 can move relative to the first housing 116 in the axis L1 direction, but is prevented from rotating relative thereto. As will be described later, since the nut 113 is fixed to the first piston 115 by coupling tools 119, the nut 113 is prevented from rotating relative to the first housing 116.

The nut 113 faces the inward flange portion 116b of the first housing 116 and has an outward flange portion 113a at a distal end portion thereof. The coupling tools 119 such as bolts used for coupling to the first piston 115 are attached to the outward flange portion 113a.

A female screw groove 113b is formed in an inner periphery of the nut 113, and a male screw groove 112b is formed in an outer periphery of the screw shaft 112. A lead of each of the female screw groove 113b and the male screw groove 112b is LD1.

A plurality of balls 114 are rollably accommodated in a spiral rolling groove formed between the female screw groove 113b and the male screw groove 112b. When the screw shaft 112 and the nut 113 are relatively rotated, the balls 114 that have reached one end of a rolling path are returned to the other end of the rolling path via a circulation path which is not shown. Thus, the relative rotation between the screw shaft 112 and the nut 113 is continuously performed. In the present embodiment, a tube type, a coma type, an end deflector type, an end cap type, or the like can be adopted as a circulation method of the balls 114, and these are known techniques, and thus description thereof will be omitted.

The first piston 115 has a bottomed cylindrical shape and is disposed axially slidably in the first cylinder chamber 116a. Outer diameters of the first piston 115 and the outward flange portion 113a of the nut 113 are slightly smaller than an inner diameter of the first housing 116. The outward flange portion 113a of the nut 113 is connected to an opening end of the first piston 115 via the coupling tools 119, and thereby the first piston 115 moves linearly together with the nut 113.

The screw shaft 112 can enter an inside of the first piston 115. A circumferential groove 115a is formed in an outer periphery of the first piston 115 near a bottom wall thereof. An annular first seal member SL1' is disposed in the circumferential groove 115a to seal between the outer periphery of the first piston 115 and the inner periphery of the first housing 116. A space surrounded by an end portion of the first piston 115 on a bottom wall side and the inner periphery and a bottom wall of the first housing 116 constitutes a first variable volume space SP1 capable of storing the hydraulic oil in the first cylinder chamber 116a. That is, a part of an internal space of the first housing 116 serves as the first cylinder chamber 116a, and at least a part of the first cylinder chamber 116a serves as the first variable volume space SP1 whose volume increases or decreases in response to a displacement of the first piston 115.

An opening 116c is formed to establish communication between an outside of the first housing 116 and the first variable volume space SP1. A first pipe TB1 coupled to the drive device 200 is connected to the opening 116c.

### (Second Hydraulic Pressure Generation Device)

The second hydraulic pressure generation device 120 includes a second ball screw 121, a second piston 125, a hollow second housing 126 including a second cylinder chamber 126a, and a rotation prevention device 27. The second ball screw 121 includes a screw shaft 122, a nut 123, and a plurality of balls 124. The second cylinder chamber 126a is disposed to face the first cylinder chamber 116a with opening ends thereof face each other. The second housing 126 has a bottomed tube shape, and has an inward flange portion 126b on an opening end side (right side in FIG. 4A). The inward flange portion 126b is formed separately from the second housing 126, and is attached to an opening end of the second housing 126 using bolts or the like after the second piston 125 and the nut 123 are inserted into the second housing 126.

The screw shaft 122 shares the axis L1 with the screw shaft 112 of the first ball screw 111, but is separate from the screw shaft 112 and is not coupled thereto. The screw shaft 122 is rotatably supported by the second housing 126 via a second ball bearing 128. More specifically, an inner ring of the second ball bearing 128 is press-fitted to a cylindrical shaft portion 122a extending in an axial direction from the screw shaft 122. An outer ring of the second ball bearing 128 is fixed to the inward flange portion 126b by a plate holder 146 attached to the inward flange portion 126b formed at an end portion of the second housing 126. Since the opening end of the second housing 126 is closed by the second ball bearing 128, foreign matters can be prevented from entering the second housing 126 from outside. Instead of the second ball bearing 128, any rolling bearing such as a roller bearing may be used.

The plate holder 146 extends radially outward of the second ball bearing 128 in parallel with the motor holder 141, the motor holder 141 and the plate holder 146 are connected to each other near outer edges thereof via a frame-shaped spacer 148, and a space in which the drive system 150 is disposed between the motor holder 141 and the plate holder 146 is sealed by the spacer 148.

A second driven pulley 154 is attached to an end portion of the cylindrical shaft portion 122a protruding from a driven-side opening 146a formed in the plate holder 146, and rotates integrally with the cylindrical shaft portion 122a.

Further, an end portion of the rotary shaft 140a of the electric motor 140 entering the driven-side opening 146b formed in the plate holder 146 is rotatably supported by a ball bearing 147 (and a bearing built in the electric motor 140) in the driven-side opening 146b. Further, a second driving pulley 155 is attached to the rotary shaft 140a between the first driving pulley 152 and the ball bearing 147, and rotates integrally with the rotary shaft 140a.

A second belt 156 is wound around the second driven pulley 154 and the second driving pulley 155. Therefore, the rotary force of the rotary shaft 140a is transmitted to the cylindrical shaft portion 122a, that is, the screw shaft 122 via the second driving pulley 155, the second belt 156, and the second driven pulley 154. In the present embodiment, the first driving pulley 152, the first belt 153, the first driven pulley 151, the second driving pulley 155, the second belt 156, and the second driven pulley 154 constitute the drive system 150. It is assumed that a pulley ratio of the first driving pulley 152 and the first driven pulley 151 is equal to a pulley ratio of the second driving pulley 155 and the second driven pulley 154.

The screw shaft 122 is disposed coaxially with the nut 123 while being inserted into the nut 123 disposed inside the second housing 126. In the second ball screw 121 of the present embodiment, the nut 123 is used as a linear motion component. The nut 123 is prevented from rotating relative to the second housing 126 by the rotation prevention device 127. The rotation prevention device 127 includes a pin 127a protruding from an outer periphery toward an inner periphery of the second housing 126, and a linear groove 125b formed in an outer periphery of the second piston 125 and parallel to the axis L1. After the second piston 125 is disposed in the second housing 126, the pin 127a can be inserted into a hole of the second housing 126 while adjusting a phase, and an inner end thereof can be engaged with the linear groove 125b. Thus, the second piston 125 can move relative to the second housing 126 in the axis L1 direction, but is prevented from rotating relative thereto. As will be described later, since the nut 123 is fixed to the second piston 125 by coupling tools 129, the nut 123 is prevented from rotating relative to the second housing 126.

The nut 123 faces the inward flange portion 126b of the second housing 126 and has an outward flange portion 123a at a distal end portion thereof. The coupling tools 129 such as bolts used for coupling to the second piston 125 are attached to the outward flange portion 123a.

A female screw groove 123b is formed in an inner periphery of the nut 123, and a male screw groove 122b is formed in an outer periphery of the screw shaft 122. A lead of each of the female screw groove 123b and the male screw groove 122b is LD2, which is different from the lead LD1 of the first ball screw 111. A relationship between the leads LD1, LD2 will be described later.

The plurality of balls 124 are rollably accommodated in a spiral rolling groove formed between the female screw groove 123b and the male screw groove 122b. When the screw shaft 122 and the nut 123 are relatively rotated, the balls 124 that have reached one end of a rolling path are returned to the other end of the rolling path via a circulation path which is not shown. Accordingly, the relative rotation between the screw shaft 122 and the nut 123 is continuously performed. In the present embodiment, a tube type, a coma type, an end deflector type, an end cap type, or the like can be adopted as a circulation method of the balls 124, and these are known techniques, and thus description thereof will be omitted.

The second piston 125 has a bottomed cylindrical shape and is disposed axially slidably in the second cylinder chamber 126a. Outer diameters of the second piston 125 and the outward flange portion 123a of the nut 123 are slightly smaller than an inner diameter of the second housing 126. The outward flange portion 123a of the nut 123 is connected to an opening end of the second piston 125 via coupling tools 129, and thereby the second piston 125 moves linearly together with the nut 123.

The screw shaft 122 can enter an inside of the second piston 125. A circumferential groove 125a is formed in an outer periphery of the second piston 125 near a bottom wall thereof. An annular second seal member SL2' is disposed in the circumferential groove 125a to seal between the outer periphery of the second piston 125 and the inner periphery of the second housing 126. A space surrounded by an end portion of the second piston 125 on a bottom wall side and the inner periphery and a bottom wall of the second housing 126 constitutes a second variable volume space SP2 capable of storing the hydraulic oil in the second cylinder chamber 126a. That is, a part of an internal space of the second housing 126 serves as the second cylinder chamber 126a, and at least a part of the second cylinder chamber 126a serves as the second variable volume space SP2 whose volume increases or decreases in response to a displacement of the second piston 125.

An opening 126c is formed to establish communication between an outside of the second housing 126 and the second variable volume space SP2. A second pipe TB2 coupled to the drive device 200 is connected to the opening 126c.

### (Drive Device)

The drive device 200 includes a hollow cylindrical case 201 with both ends closed, a solid cylindrical drive piston 202 displaceable in the axial direction in the case 201, and a drive rod 203 coupled to the drive piston 202. It is assumed that an axis of the case 201 is L2.

An outer diameter of the drive piston 202 is substantially equal to an inner diameter of the case 201. The solid cylindrical drive rod 203 is coupled to a center of one of end surfaces of the drive piston 202 in the axial direction, penetrates a second pressure chamber PC2 (to be described later) along the axis L2, and protrudes outside from an opening 201a formed in one end surface of the case 201. A mechanical component (not shown) driven by the drive device 200 is connected to a tip end of the drive rod 203.

An inside of the case 201 is partitioned by the drive piston 202 into the second pressure chamber PC2 on a drive rod 203 side and a first pressure chamber PC1 on a side opposite to the drive rod 203. An opening 201b is formed in a peripheral wall of the case 201 on a first pressure chamber PC1 side, and the first pressure chamber PC1 establishes communication with the first variable volume space SP1 via the first pipe TB1 whose end portion is connected to the opening 201b.

An opening 201c is formed in a peripheral wall of the case 201 on a second pressure chamber PC2 side, and the second pressure chamber PC2 establishes communication with the second variable volume space SP2 via the second pipe TB2 whose end portion is connected to the opening 201c.

Here, a relationship between the lead LD1 of the first ball screw 111 and the lead LD2 of the second ball screw 121 will be described. The drive piston 202 in the drive device 200 operates by a pressure difference between the first pressure chamber PC1 and the second pressure chamber PC2 on both sides thereof. Since the hydraulic oil is an incompressible fluid, for example, in order to displace the drive piston 202 in an axis L2 direction, it is necessary to make an amount of working fluid entering or discharged from the first pressure chamber PC1 equal to an amount of working fluid entering or discharged from the second pressure chamber PC2 along with the displacement of the drive piston 202.

However, since the drive rod 203 is connected to one end surface of the drive piston 202, an amount of working fluid supplied to or discharged from the first pressure chamber PC1 is larger than an amount of working fluid supplied to or discharged from the second pressure chamber PC2 with respect to per unit axial displacement of the drive piston 202. Specifically, when the inner diameter of the case 201 is set as φA, an outer diameter of the drive rod 203 is set as φB, and a displacement amount of the drive piston 202 is set as X, an amount C of the working fluid supplied to or discharged from the first pressure chamber PC1 along with the displacement of the drive piston 202 is represented by C = Xπ (φA)²/4, and an amount D of the working fluid supplied to or discharged from the second pressure chamber PC2 is represented by D = Xπ ((φA)²-(φB)²)/4. Since C-D = Xπ (φB)²/4, it is necessary to increase an amount of working fluid entering or discharged from the first pressure chamber PC1 along with the displacement X of the drive piston 202 by Xπ (φB)²/4 with respect to the amount of working fluid entering or discharged from the second pressure chamber PC2.

Therefore, in the present embodiment, the lead LD1 of the first ball screw 111 is made larger than the lead LD2 of the second ball screw 121, and even when rotation angles of the screw shaft 112 and the screw shaft 122 are equal, an axial displacement amount of the nut 113 is made larger than an axial displacement amount of the nut 123.

Specifically, on an assumption that the inner diameter of the first cylinder chamber 116a and the inner diameter of the second cylinder chamber 126a are equal to each other, the leads are set to have a relationship of LD1: LD2 = (φA)²:((φA)²-(φB)²).

### <Description of Operation of Hydraulic pressure operation device>

It is assumed that the hydraulic oil is injected into the first variable volume space SP1, the second variable volume space SP2, the first pressure chamber PC1, the second pressure chamber PC2, the first pipe TB1, and the second pipe TB2. When the electric motor 140 rotates the rotary shaft 140a under control from a control device which is not shown, the screw shafts 112, 122 rotate in the same direction by the same angle via the drive system 150. Thus, the nut 113, which is prevented from rotating relative to the first housing 116 by the rotation prevention device 117, linearly moves rightward in FIG. 4A together with the first piston 115 inside the first cylinder chamber 116a, and the nut 123, which is prevented from rotating relative to the second housing 126 by the rotation prevention device 127, linearly moves rightward in FIG. 4A together with the second piston 125 inside the second cylinder chamber 126a.

Since the volume of the first variable volume space SP1 is reduced by the movement of the first piston 115 toward the bottom wall of the first housing 116, a predetermined amount of hydraulic oil in the first variable volume space SP1 is discharged through the opening 116c and is pressure-fed to the first pressure chamber PC1 of the drive device 200 through the first pipe TB1. Further, since the volume of the second variable volume space SP2 is increased by the movement of the second piston 125 away from the bottom wall of the second housing 126, via the second pipe TB2, the hydraulic oil in the second pressure chamber PC2 of the drive device 200 is sucked by the predetermined amount into the second variable volume space SP2 via the second pipe TB2. Thus, the drive piston 202 of the drive device 200 is displaced leftward in FIG. 4A, and the drive rod 203 can work.

According to the present embodiment, since the lead LD1 of the first ball screw 111 is set to be larger than the lead LD2 of the second ball screw 121 by a predetermined value, the amount of hydraulic oil pressure-fed from the first variable volume space SP1 to the first pressure chamber PC1 is larger than the amount of hydraulic oil discharged from the second pressure chamber PC2 to the second variable volume space SP2 by a predetermined amount, thereby ensuring a smooth operation of the drive device 200.

Meanwhile, when the electric motor 140 reversely rotates the rotary shaft 140a under the control of the control device which is not shown, the screw shafts 112, 122 rotate in reverse directions by the same angle via the drive system 150. Thus, the nut 113 linearly moves leftward in FIG. 4A together with the first piston 115, and the nut 123 linearly moves leftward in FIG. 4A together with the second piston 125. Thus, a predetermined amount of hydraulic oil in the first pressure chamber PC1 of the drive device 200 is sucked into the first variable volume space SP1 via the first pipe TB1, and the hydraulic oil in the second variable volume space SP2 is pressure-fed to the second pressure chamber PC2 via the second pipe TB2 by the predetermined amount. Therefore, the drive piston 202 of the drive device 200 is displaced rightward in FIG. 4A and drawn into the case 201.

According to the present embodiment, since the first ball screw 111 of the first hydraulic pressure generation device 110 and the second ball screw 121 of the second hydraulic pressure generation device 120 can be simultaneously driven by an output of the single motor 400 to operate the drive device 200, the number of components is reduced, and complicated control is unnecessary.

Although the pulleys and the belt are used as the drive system 150, a timing belt, a timing chain, a gear train in which a plurality of gears are engaged with each other, or the like can be used. However, in the case where the pulleys and the belt are used as the drive system 150, when the amount of hydraulic oil supplied to and discharged from the hydraulic pressure generation device 100 varies due to backlash of the ball screw or the like, there is an advantage that the variation can be absorbed by sliding between the pulleys and the belt.

The hydraulic pressure generation device of the present embodiment (and embodiments to be described later) is preferably used for driving a hydraulic cylinder, and is particularly suitable for a hydraulic cylinder with a small amount of oil and a short stroke. A related-art hydraulic device using a hydraulic pump-based hydraulic pressure generating means requires devices such as a valve for switching the hydraulic pressure and a pressure regulating valve for regulating an operating speed and an oil pressure of a cylinder. Meanwhile, in the hydraulic pressure generation device of the present embodiment (and embodiments to be described later), since a movement speed and a stroke of the piston can be easily changed, and a speed and a pressure of the hydraulic cylinder can be adjusted by changing a piston stroke of the hydraulic pressure generation device, a component configuration of the hydraulic device can be simplified.

The screw shafts 112, 122 of the ball screw 111, 121 used in the hydraulic pressure generation device of the present embodiment (and embodiments to be described later) may have a hollow shape in order to shorten a time from a start of the operation to generation of the hydraulic pressure (inertia reduction by weight reduction).

In the present embodiment (and embodiments to be described later), the single row deep groove ball bearings 118, 128 are used to support the screw shafts 112, 122, but the number and type of bearings can be appropriately changed as long as loads of the screw shafts 112, 122 in the axial direction and the radial direction can be supported. For example, two angular ball bearings may be used in a face-to-face or back-to-back manner. Alternatively, two tapered roller bearings may be used in a face-to-face or back-to-back manner.

### (Hydraulic Pressure Operation Device According to First Modification)

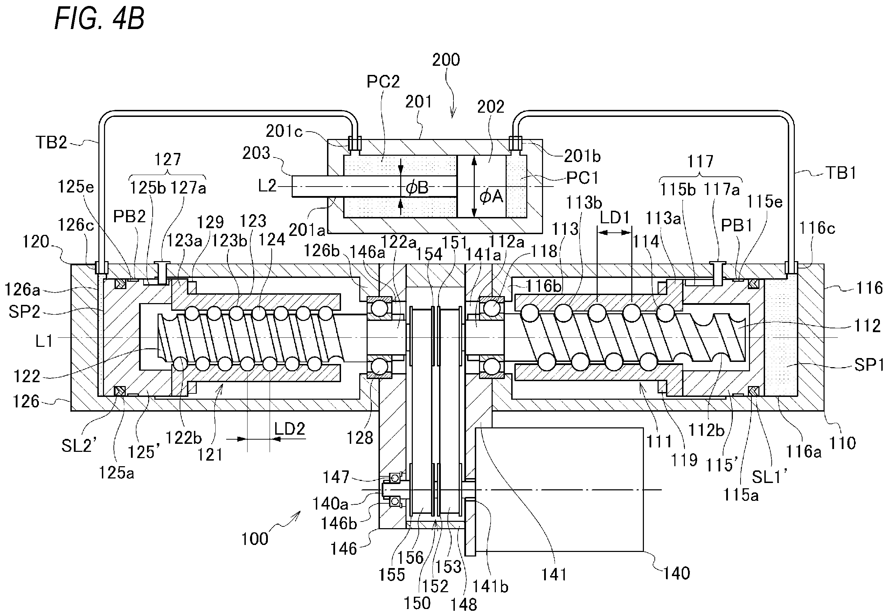

FIG. 4B is an axial cross-sectional view of the hydraulic pressure generation device according to a first modification of the first embodiment. The present modification is different from the embodiment of FIG. 4A in that a shallow circumferential groove 115e is formed in an outer peripheral surface between the circumferential groove 115a and the linear groove 115b of a first piston 115', a slide bearing PB1 is disposed in the circumferential groove 115e, a shallow circumferential groove 125e is formed in an outer peripheral surface between the circumferential groove 125a and the linear groove 125b of the second piston 125', and a slide bearing PB2 is disposed in the circumferential groove 125e. Other configurations are the same as those of the first embodiment, and thus redundant description will be omitted.

The slide bearing PB1 is a thin cylindrical component that is attached to the circumferential groove 115e formed in the outer peripheral surface of the first piston 115' and provided to be in sliding contact with an inner peripheral surface of the first housing 116, and implements sliding with low friction. By providing the slide bearing PB1, there is an effect of preventing the outer peripheral surface of the first piston 115' and the inner peripheral surface of the first housing 116 from directly sliding and causing wear on both surfaces.

The slide bearing PB2 is a thin cylindrical component that is attached to the circumferential groove 125e formed in the outer peripheral surface of the second piston 125' and provided to be in sliding contact with an inner peripheral surface of the second housing 126, and implements sliding with low friction. By providing the slide bearing PB2, there is an effect of preventing the outer peripheral surface of the second piston 125' and the inner peripheral surface of the second housing 126 from directly sliding and causing wear on both surfaces.

As a material of each of the slide bearings PB1, PB2, a metal material or a resin material that is softer than the piston and the housing and has good slidability can be appropriately used. As the metal material, copper alloy such as brass, aluminum alloy, white metal, or the like can be used, and as the resin material, PTFE, epoxy resin, polyacetal, nylon, polyethylene, phenol resin, or the like can be used. The slide bearings PB1, PB2 are preferably attached on sides of the piston near the variable volume spaces SP1, SP2, respectively. Further, each of the slide bearings PB1, PB2 may be configured to be attached to a plurality of circumferential grooves formed apart from each other in the axial direction of the piston.

### (Hydraulic Pressure Operation Device According to Second Modification)

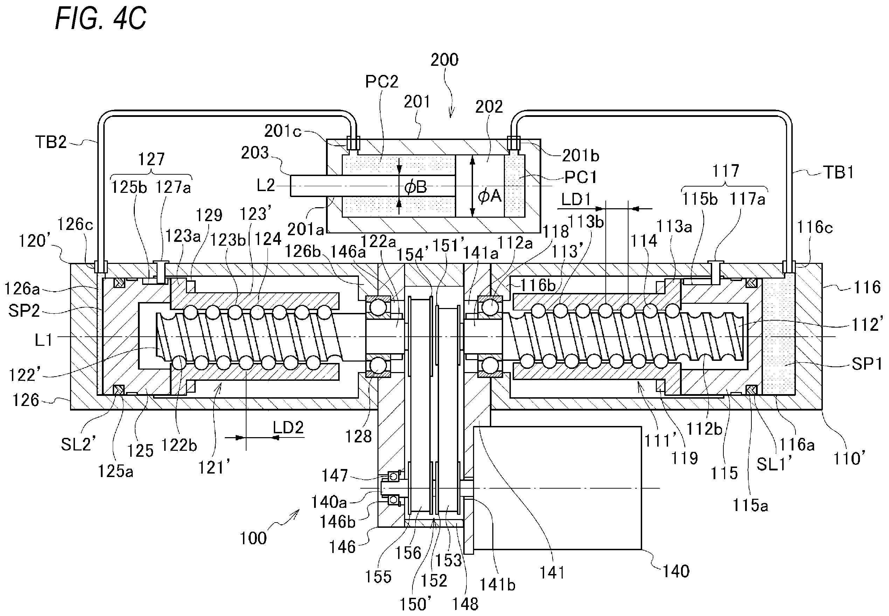

FIG. 4C is an axial cross-sectional view of a hydraulic pressure generation device according to a second modification of the first embodiment. In the embodiment of FIG. 4A, a driving force of one electric motor 140 is distributed and supplied to the first hydraulic pressure generation device 110 and the second hydraulic pressure generation device 120 in order to drive a double-body hydraulic cylinder. Therefore, the lead LD1 of the first hydraulic pressure generation device 110 and the lead LD2 of the second hydraulic pressure generation device 120 are made different from each other according to a difference in the cross-sectional area in a direction orthogonal to the axis between the second pressure chamber PC2 on the drive rod 203 side of the drive device 200 and the first pressure chamber PC1 on the side opposite to the rod.

In contrast, in the present modification, instead of making the lead LD1 of a first hydraulic pressure generation device 110' (a screw shaft 112' and a nut 113' of the first ball screw 111') equal to the lead LD2 of a second hydraulic pressure generation device 120' (a screw shaft 122' and a nut 123' of a second ball screw 121'), a pulley ratio of the second driving pulley 155 and a second driven pulley 154' is made different from (is made larger by a predetermined value than) a pulley ratio of the first driving pulley 152 and a first driven pulley 151' in a drive system 150' according to the difference in the cross-sectional area in the direction orthogonal to the axis. Other configurations are the same as those of the first embodiment, and thus redundant description will be omitted.

In FIG. 4C, only a diameter of the driven pulley is changed, but a diameter of one of the driven pulley and the driving pulley may be made different from a diameter of the other of the driven pulley and the driving pulley. Further, the first modification and the second modification may be combined.

### (Hydraulic Pressure Operation Device According to Second Embodiment)

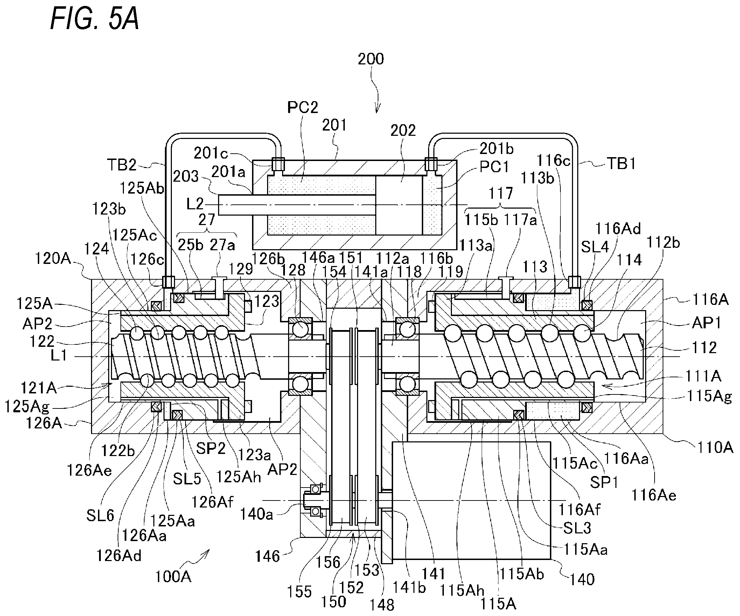

FIG. 5A is an axial cross-sectional view of a hydraulic pressure operation device according to a second embodiment.

The hydraulic pressure operation device of the present embodiment includes a hydraulic pressure generation device 100A and the drive device 200. The hydraulic pressure generation device 100A includes a first hydraulic pressure generation device 110A, a second hydraulic pressure generation device 120A, the electric motor 140, and the drive system 150 that transmits a rotary force of the electric motor 140 to the first hydraulic pressure generation device 110A and the second hydraulic pressure generation device 120A. The first hydraulic pressure generation device 110A and the second hydraulic pressure generation device 120A have the common axis L1. Thus, a compact hydraulic pressure operation device can be provided.

In the present embodiment, the first hydraulic pressure generation device 110A and the second hydraulic pressure generation device 120A in the hydraulic pressure generation device 100A are different from those in the first embodiment described above. Therefore, the electric motor 140, the drive system 150, and the drive device 200 common to those of the first embodiment are denoted by the same reference numerals, and redundant description will be omitted. Further, in the first hydraulic pressure generation device 110A and the second hydraulic pressure generation device 120A, components having the same basic configuration are denoted by the same reference numerals, and redundant description will be omitted.

### (First Hydraulic Pressure Generation Device)

The first hydraulic pressure generation device 110A includes a first ball screw 111A, a first piston 115A, a bottomed cylindrical hollow first housing 116A including a first cylinder chamber 116Aa, and a rotation prevention device 117. The first ball screw 111A includes the screw shaft 112, the nut 113, and the plurality of balls 114. The first housing 116A of the present embodiment has a bottomed tube shape, and includes an diameter-enlarged cylindrical portion 116Af in which the first cylinder chamber 116Aa is formed and a diameter-reduced cylindrical portion 16Ae having an inner diameter smaller than that of the diameter-enlarged cylindrical portion 116Af, which are arranged adjacently in the axial direction. The inward flange portion 116b is disposed at an opening end adjacent to the diameter-enlarged cylindrical portion 116Af. The inward flange portion 116b is formed separately from the first housing 116A, and is attached to the opening end of the first housing 116A using bolts or the like after the first piston 115A and the nut 113 are inserted into the first housing 116A.

The screw shaft 112 is rotatably supported by the first housing 116A via the first ball bearing 118. More specifically, the inner ring of the first ball bearing 118 is press-fitted to the cylindrical shaft portion 112a extending in the axial direction from the screw shaft 112, and the outer ring of the first ball bearing 118 is fixed to the inward flange portion 116b formed at an end portion of the first housing 116A by the motor holder 141 attached to the inward flange portion 116b. Since the opening end of the first housing 116A is sealed by the first ball bearing 118, foreign matters can be prevented from entering the first housing 116 from outside. Instead of the first ball bearing 118, any rolling bearing such as a roller bearing may be used.

The motor holder 141 extends radially outward of the first ball bearing 118, and the electric motor 140 is attached thereto such that a rotation axis of the electric motor 140 is parallel to the axis L1. A rotary force of the rotary shaft 140a of the electric motor 140 is transmitted to the screw shaft 112 via the drive system 150.

The screw shaft 112 is disposed coaxially with the nut 113 while being inserted into the nut 113 disposed inside the first housing 116A. The nut 113 is prevented from rotating relative to the first housing 116A by the rotation prevention device 117. The rotation prevention device 117 includes the pin 117a protruding from an outer periphery toward an inner periphery of the first housing 116A, and the linear groove 115b formed in an outer periphery of the first piston 115A and parallel to the axis L. After the first piston 115A is disposed in the first housing 116A, the pin 117a can be inserted into a hole of the first housing 116A while adjusting a phase, and an inner end thereof can be engaged with the linear groove 115b. Thus, the first piston 115A can move relative to the first housing 116A in the axis L direction, but is prevented from rotating relative thereto. As will be described later, since the nut 113 is fixed to the first piston 115A by the coupling tools 119, the nut 113 is prevented from rotating relative to the first housing 116A.

The nut 113 faces the inward flange portion 116b of the first housing 116A and has an outward flange portion 113a at a proximal end portion thereof. The coupling tools 119 such as bolts used for coupling to the first piston 115A are attached to the outward flange portion 113a.

The female screw groove 113b is formed in an inner periphery of the nut 113, the male screw groove 112b is formed in an outer periphery of the screw shaft 112, and the plurality of balls 114 are rollably accommodated in a spiral rolling groove formed between the female screw groove 113b and the male screw groove 112b. When the screw shaft 112 and the nut 113 are relatively rotated, the balls 114 that have reached one end of a rolling path are returned to the other end of the rolling path via a circulation path which is not shown. Thus, the relative rotation between the screw shaft 112 and the nut 113 is continuously performed. In the present embodiment, a tube type, a coma type, an end deflector type, an end cap type, or the like can also be adopted as a circulation type of the balls 114.

The first piston 115A is continuously provided with a thin cylindrical portion 115Ac and a thick cylindrical portion 115Ab that is thicker than the thin cylindrical portion 115Ac and is disposed coaxially and continuously thereto. The thick cylindrical portion 115Ab is disposed radially inside the diameter-enlarged cylindrical portion 116Af, an outer diameter of the thick cylindrical portion 115Ab is equal to or slightly smaller than an inner diameter of the diameter-enlarged cylindrical portion 116Af, and an outer diameter of the outward flange portion 113a of the nut 113 is equal to or slightly smaller than the inner diameter of the diameter-enlarged cylindrical portion 116Af. A part of the thin cylindrical portion 115Ac is disposed radially inside the diameter-reduced cylindrical portion 116Ae, and an outer diameter of the thin cylindrical portion 115Ac is equal to or slightly smaller than an inner diameter of the diameter-reduced cylindrical portion 116Ae.

The first piston 115A is disposed axially slidably in the first cylinder chamber 116Aa together with the nut 113 in such a manner that an outer periphery of the thick cylindrical portion 115Ab is relatively movably fitted to an inner periphery of the diameter-enlarged cylindrical portion 116Af while the thick cylindrical portion 115Ab is adjacent to the outward flange portion 113a, and inner peripheries of the thin cylindrical portion 115Ac and the thick cylindrical portion 115Ab are relatively non-rotatably fitted to an outer periphery of the nut 113.

A circumferential groove 115Aa is formed in an outer periphery near an end portion of the thick cylindrical portion 115Ab close to the thin cylindrical portion 115Ac. An annular middle seal member SL3 is disposed in the circumferential groove 115Aa. The middle seal member SL3 seals between the outer periphery of the thick cylindrical portion 115Ab and the inner periphery of the diameter-enlarged cylindrical portion 116Af of the first housing 116A. Meanwhile, a circumferential groove 116Ad is formed in an inner periphery near an end portion of the diameter-reduced cylindrical portion 116Ae close to the diameter-enlarged cylindrical portion 116Af of the first housing 116A. An annular outer seal member SL4 is disposed in the circumferential groove 116Ad. The outer seal member SL4 seals between the outer periphery of the thin cylindrical portion 115Ac of the first piston 115A and the inner periphery of the diameter-reduced cylindrical portion 116Ae of the first housing 116A. The outer periphery of the first piston 115A may be provided with a seal groove, and the second seal member may be disposed therein.

A space surrounded by the outer periphery of the first piston 115A (thin cylindrical portion 115Ac) and the inner periphery of the first housing 116A (diameter-enlarged cylindrical portion 116Af) between the thick cylindrical portion 115Ab and the diameter-reduced cylindrical portion 116Ae separated in the axial direction constitutes the first variable volume space SP1 capable of storing the hydraulic oil in the first cylinder chamber 116Aa. That is, a part of an internal space of the first housing 116A serves as the first cylinder chamber 116Aa, and at least a part of the first cylinder chamber 116Aa serves as the first variable volume space SP1 whose volume increases or decreases in response to a displacement of the first piston 115A. Therefore, a total length of the first hydraulic pressure generation device 110A can be shortened.

The first piston 115A has a relief groove 115Ag formed in the inner peripheries of the thin cylindrical portion 115Ac and the thick cylindrical portion 115Ab and extending straight in the axis L1 direction, and a communication hole 115Ah establishing communication between the inner periphery and the outer peripheries of the thick cylindrical portion 115Ab. One end of the relief groove 115Ag is open to the space in the diameter-reduced cylindrical portion 116Ae, and the other end of the relief groove 115Ag communicates with an inner end of the communication hole 115Ah. The relief groove 115Ag and the communication hole 115Ah constitute an air path.

The opening 116c is formed in the diameter-enlarged cylindrical portion 116Af near the diameter-reduced cylindrical portion 116Ae to establish communication between an outside of the first housing 116A and the first variable volume space SP1. The first pipe TB1 coupled to the drive device 200 is connected to the opening 116c.

### (Second Hydraulic Pressure Generation Device)

The second hydraulic pressure generation device 120A includes a second ball screw 121A, a second piston 125A, a bottomed cylindrical hollow second housing 126A including a second cylinder chamber 126Aa, and the rotation prevention device 127. The second ball screw 121A includes the screw shaft 122, the nut 123, and the plurality of balls 124. The second cylinder chamber 126Aa is disposed to face the first cylinder chamber 116Aa with opening ends thereof face each other. The second housing 126A of the present embodiment has a bottomed tube shape, and includes a diameter-enlarged cylindrical portion 126Af in which the second cylinder chamber 126Aa is formed and a diameter-reduced cylindrical portion 126Ae having an inner diameter smaller than that of the diameter-enlarged cylindrical portion 126Af, which are arranged adjacently in the axial direction. The inward flange portion 126b is disposed at an opening end adjacent to the diameter-enlarged cylindrical portion 126Af. The inward flange portion 126b is formed separately from the second housing 126A, and is attached to the opening end of the second housing 126A using bolts or the like after the second piston 125A and the nut 123 are inserted into the second housing 126A.

The screw shaft 122 shares the axis L1 with the screw shaft 112 of the first ball screw 111A, but is separate from the screw shaft 112 and is not coupled thereto. The screw shaft 122 is rotatably supported by the second housing 126A via the second ball bearing 128. More specifically, the inner ring of the second ball bearing 128 is press-fitted to the cylindrical shaft portion 122a extending in the axial direction from the screw shaft 122, and the outer ring of the second ball bearing 128 is fixed to the inward flange portion 126b formed at an end portion of the second housing 126A by the plate holder 146 attached to the inward flange portion 126b. Since the opening end of the second housing 126A is sealed by the second ball bearing 128, foreign matters can be prevented from entering the second housing 126A from outside. Instead of the second ball bearing 128, any rolling bearing such as a roller bearing may be used.

The plate holder 146 extends radially outward of the second ball bearing 128 in parallel with the motor holder 141, the motor holder 141 and the plate holder 146 are connected to each other near outer edges thereof via the frame-shaped spacer 148, and a space in which the drive system 150 is disposed between the motor holder 141 and the plate holder 146 is sealed by the spacer 148. A rotary force of the rotary shaft 140a of the electric motor 140 is transmitted to the screw shaft 122 via the drive system 150.

The screw shaft 122 is disposed coaxially with the nut 123 while being inserted into the nut 123 disposed inside the second housing 126A. The nut 123 is prevented from rotating relative to the second housing 126A by the rotation prevention device 127. The rotation prevention device 127 includes the pin 127a protruding from an outer periphery toward an inner periphery of the second housing 126A, and the linear groove 125b formed in an outer periphery of the second piston 125A and parallel to the axis L. After the second piston 125A is disposed in the second housing 126A, the pin 127a can be inserted into a hole of the second housing 126A while adjusting a phase, and an inner end thereof can be engaged with the linear groove 125b. Thus, the second piston 125A can move relative to the second housing 126A in the axis L direction, but is prevented from rotating relative thereto. As will be described later, since the nut 123 is fixed to the second piston 125A by the coupling tools 129, the nut 123 is prevented from rotating relative to the second housing 126A.

The nut 123 faces the inward flange portion 126b of the second housing 126A and has the outward flange portion 123a at a proximal end portion thereof. The coupling tools 129 such as bolts used for coupling to the second piston 125A are attached to the outward flange portion 123a.

The female screw groove 123b is formed in an inner periphery of the nut 123, the male screw groove 122b is formed in an outer periphery of the screw shaft 122, and the plurality of balls 124 are rollably accommodated in a spiral rolling groove formed between the female screw groove 123b and the male screw groove 122b. When the screw shaft 122 and the nut 123 are relatively rotated, the balls 124 that have reached one end of a rolling path are returned to the other end of the rolling path via a circulation path which is not shown. Accordingly, the relative rotation between the screw shaft 122 and the nut 123 is continuously performed. In the present embodiment, a tube type, a coma type, an end deflector type, an end cap type, or the like can also be adopted as a circulation type of the balls 124.

The second piston 125A is continuously provided with a thin cylindrical portion 125Ac and a thick cylindrical portion 125Ab that is thicker than the thin cylindrical portion 125Ac and is disposed coaxially and continuously thereto. The thick cylindrical portion 125Ab is disposed radially inside the diameter-enlarged cylindrical portion 126Af, an outer diameter of the thick cylindrical portion 125Ab is equal to or slightly smaller than an inner diameter of the diameter-enlarged cylindrical portion 126Af, and an outer diameter of the outward flange portion 123a of the nut 123 is equal to or slightly smaller than the inner diameter of the diameter-enlarged cylindrical portion 126Af. A part of the thin cylindrical portion 125Ac is disposed radially inside the diameter-reduced cylindrical portion 126Ae, and an outer diameter of the thin cylindrical portion 125Ac is equal to or slightly smaller than an inner diameter of the diameter-reduced cylindrical portion 126Ae.

The second piston 125A is disposed axially slidably in the second cylinder chamber 126Aa together with the nut 123 in such a manner that an outer periphery of the thick cylindrical portion 125Ab is relatively movably fitted to an inner periphery of the diameter-enlarged cylindrical portion 126Af while the thick cylindrical portion 125Ab is adjacent to the outward flange portion 123a, and inner peripheries of the thin cylindrical portion 125Ac and the thick cylindrical portion 125Ab are relatively non-rotatably fitted to an outer periphery of the nut 123. It is preferable that an end portion of the second piston 125A on a diameter-reduced cylindrical portion 126Ae side and an end portion of the nut 123 on the diameter-reduced cylindrical portion 126Ae side coincide with each other in axial position and are flush with each other.

A circumferential groove 125Aa is formed in an outer periphery near an end portion of the thick cylindrical portion 125Ab close to the thin cylindrical portion 125Ac. An annular middle seal member SL5 is disposed in the circumferential groove 125Aa. The middle seal member SL5 seals between the outer periphery of the thick cylindrical portion 125Ab and the inner periphery of the diameter-enlarged cylindrical portion 126Af of the second housing 126A. Meanwhile, a circumferential groove 126Ad is formed in an inner periphery near an end portion of the diameter-reduced cylindrical portion 126Ae close to the diameter-enlarged cylindrical portion 126Af of the second housing 126A. An annular outer seal member SL6 is disposed in the circumferential groove 126Ad. The outer seal member SL6 seals between the outer periphery of the thin cylindrical portion 125Ac of the second piston 125A and the inner periphery of the diameter-reduced cylindrical portion 126Ae of the second housing 126A. The outer periphery of the second piston 125A may be provided with a seal groove, and the second seal member may be disposed therein.

A space surrounded by the outer periphery of the second piston 125A (thin cylindrical portion 125Ac) and the inner periphery of the second housing 126A (diameter-enlarged cylindrical portion 126Af) between the thick cylindrical portion 125Ab and the diameter-reduced cylindrical portion 126Ae separated in the axial direction constitutes the second variable volume space SP2 capable of storing the hydraulic oil in the second cylinder chamber 126Aa. That is, a part of an internal space of the second housing 126A serves as the second cylinder chamber 126Aa, and at least a part of the second cylinder chamber 126Aa serves as the second variable volume space SP2 whose volume increases or decreases in response to a displacement of the second piston 125A. Therefore, an entire length of the second hydraulic pressure generation device 120A can be shortened.

The second piston 125A has a relief groove 125Ag formed in the inner peripheries of the thin cylindrical portion 125Ac and the thick cylindrical portion 125Ab and extending straight in the axis L direction, and a communication hole 125Ah establishing communication between the inner periphery and the outer periphery of the thick cylindrical portion 125Ab. One end of the relief groove 125Ag is open to the space in the diameter-reduced cylindrical portion 126Ae, and the other end of the relief groove 125Ag communicates with an inner end of the communication hole 125Ah. The relief groove 125Ag and the communication hole 125Ah constitute an air path.

An opening 126c is formed in the diameter-enlarged cylindrical portion 126Af near the diameter-reduced cylindrical portion 126Ae to establish communication between an outside of the second housing 126A and the second variable volume space SP2. The second pipe TB2 coupled to the drive device 200 is connected to the opening 126c.

### <Description of Operation of Hydraulic pressure operation device>

It is assumed that the hydraulic oil is injected into the first variable volume space SP1, the second variable volume space SP2, the first pressure chamber PC1, the second pressure chamber PC2, the first pipe TB1, and the second pipe TB2. When the electric motor 140 rotates the rotary shaft 140a under control from a control device which is not shown, the screw shafts 112, 122 rotate in the same direction by the same angle via the drive system 150. Thus, the nut 113, which is prevented from rotating relative to the first housing 116A by the rotation prevention device 117, linearly moves rightward in FIG. 5A together with the first piston 115A inside the first cylinder chamber 116Aa, and the nut 123, which is prevented from rotating relative to the second housing 126A by the rotation prevention device 127, linearly moves rightward in FIG. 5A together with the second piston 125A inside the second cylinder chamber 126Aa.

At this time, the thick cylindrical portion 115Ab of the first piston 115A slides relative to the diameter-enlarged cylindrical portion 116Af, and the thin cylindrical portion 115Ac slides relative to the diameter-reduced cylindrical portion 116Ae. Any pair of the portions may be slid. Due to the movement of the first piston 115A, the thick cylindrical portion 115Ab is displaced toward a step portion between the diameter-enlarged cylindrical portion 116Af and the diameter-reduced cylindrical portion 116Ae, and thus the volume of the first variable volume space SP1 is reduced, and the hydraulic oil in the first variable volume space SP1 is pressure-fed to the first pressure chamber PC1 of the drive device 200 via the first pipe TB1.

At the same time, the thick cylindrical portion 125Ab of the second piston 125A slides relative to the diameter-enlarged cylindrical portion 126Af, and the thin cylindrical portion 125Ac slides relative to the diameter-reduced cylindrical portion 126Ae. Any pair of the portions may be slid. Due to the movement of the second piston 125A, the thick cylindrical portion 125Ab is displaced away from a step portion between the diameter-enlarged cylindrical portion 126Af and the diameter-reduced cylindrical portion 126Ae, and thus the volume of the second variable volume space SP2 is increased, so that the hydraulic oil in the first pressure chamber PC1 of the drive device 200 is sucked into the second variable volume space SP2 via the second pipe TB2. Thus, the drive piston 202 of the drive device 200 is displaced leftward in FIG. 5A, and the drive rod 203 can work.

In the present embodiment, when the first piston 115A and the second piston 125A stroke in the axial direction, air in the first air chamber AP1 (in the diameter-reduced cylindrical portion 116Ae) provided between the first piston 115A and the bottom wall of the first housing 116A and air in the second air chamber AP2 (in the diameter-reduced cylindrical portion 126Ae) provided between the second piston 125A and the bottom wall of the second housing 126A are pressurized or depressurized, and thus handling of the air in the first air chamber AP1 and the second air chamber AP2 is a problem.

According to the present embodiment, for example, when the air in the first air chamber AP1 is pressurized, the air moves to a side via the relief groove 115Ag, the communication hole 115Ah, and a gap between the inner periphery of the first housing 116A and the outer periphery of the thick cylindrical portion 115Ab and an outer periphery of the outward flange portion 113a. Further, when the air in the first air chamber AP1 is depressurized, the air on the ball bearing 118 side returns to the first air chamber AP1 via the relief groove 115Ag and the communication hole 115Ah. Therefore, when the first piston 115A strokes in the axial direction, resistance due to pressurization or depressurization of the air in the first air chamber AP1 is reduced, and the first piston 115A can be smoothly operated.

Further, for example, when the air in the second air chamber AP2 is pressurized, the air moves to a second ball bearing 128 side via the relief groove 125Ag, the communication hole 125Ah, and a gap between the inner periphery of the second housing 126A and the outer periphery of the thick cylindrical portion 125Ab and an outer periphery of the outward flange portion 123a. Further, when the air in the second air chamber AP2 is depressurized, the air on the ball bearing 128 side returns to the second air chamber AP2 via the relief groove 125Ag and the communication hole 125Ah. Therefore, when the second piston 125A strokes in the axial direction, resistance due to pressurization or depressurization of the air in the second air chamber AP2 is reduced, and the second piston 125A can be smoothly operated.

As well in the present embodiment, similar to the first embodiment, since a lead of the first ball screw 111A is set to be larger than a lead of the second ball screw 121A by a predetermined value, an amount of hydraulic oil pressure-fed from the first variable volume space SP1 to the first pressure chamber PC1 is larger than an amount of hydraulic oil discharged from the second pressure chamber PC2 to the second variable volume space SP2 by a predetermined amount, thereby ensuring a smooth operation of the drive device 200.

Meanwhile, when the electric motor 140 reversely rotates the rotary shaft 140a under the control of the control device which is not shown, the screw shafts 112, 122 rotate in reverse directions by the same angle via the drive system 150. Thus, the nut 113 linearly moves leftward in FIG. 5A together with the first piston 115A, and the nut 123 linearly moves leftward in FIG. 5A together with the second piston 125A. Thus, a predetermined amount of hydraulic oil in the first pressure chamber PC1 of the drive device 200 is sucked into the first variable volume space SP1 via the first pipe TB1, and the hydraulic oil in the second variable volume space SP2 is pressure-fed to the second pressure chamber PC2 via the second pipe TB2 by the predetermined amount. Therefore, the drive piston 202 of the drive device 200 is displaced rightward in FIG. 5A and drawn into the case 201.

### (Hydraulic Pressure Operation Device According to First Modification)

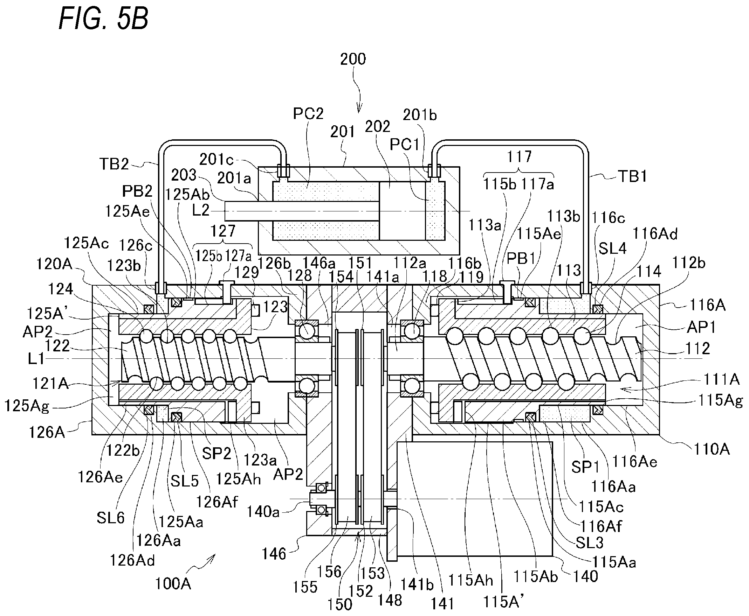

FIG. 5B is an axial cross-sectional view of a hydraulic pressure generation device according to a first modification of the second embodiment. The present modification is different from the embodiment of FIG. 5A in that a shallow circumferential groove 115Ae is formed in an outer peripheral surface between the circumferential groove 115a and the linear groove 115b of a first piston 115A', the slide bearing PB1 is disposed in the circumferential groove 115Ae, a shallow circumferential groove 125Ae is formed in an outer peripheral surface between the circumferential groove 125Aa and the linear groove 125b of a second piston 125A', and the slide bearing PB2 is disposed in the circumferential groove 125Ae. Other configurations are the same as those of the second embodiment, and thus redundant description will be omitted.

The slide bearing PB1 is a thin cylindrical component that is attached to the circumferential groove 115Ae formed in the outer peripheral surface of the first piston 115A' and provided to be in sliding contact with an inner peripheral surface of the first housing 116A, and implements sliding with low friction. By providing the slide bearing PB1, there is an effect of preventing the outer peripheral surface of the first piston 115A' and the inner peripheral surface of the first housing 116A from directly sliding and causing wear on both surfaces.

The slide bearing PB2 is a thin cylindrical component that is attached to the circumferential groove 125Ae formed in the outer peripheral surface of the second piston 125A' and provided to be in sliding contact with an inner peripheral surface of the second housing 126A, and implements sliding with low friction. By providing the slide bearing PB2, there is an effect of preventing the outer peripheral surface of the second piston 125A' and the inner peripheral surface of the second housing 126A from directly sliding and causing wear on both surfaces. A material or the like of each of the slide bearings PB1, PB2 is the same as that of the modification of the first embodiment described above.

### (Hydraulic Pressure Operation Device According to Second Modification)

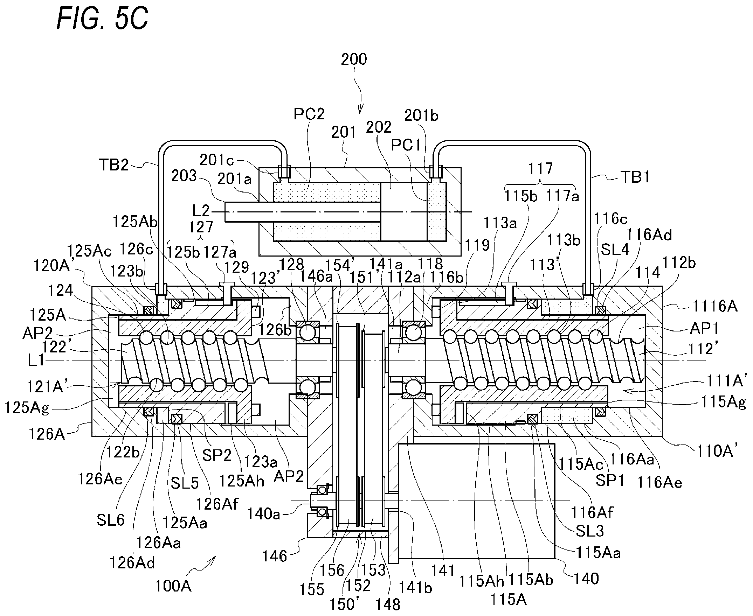

FIG. 5C is an axial cross-sectional view of a hydraulic pressure generation device according to a second modification of the second embodiment. In the embodiment of FIG. 5A, a driving force of one electric motor 140, is distributed and supplied to the first hydraulic pressure generation device 110A and the second hydraulic pressure generation device 120A to drive a double-body hydraulic cylinder. Therefore, the screw lead of the first hydraulic pressure generation device 110A and the screw lead of the second hydraulic pressure generation device 120A are made different from each other according to the difference in the cross-sectional area in the direction orthogonal to the axis between the second pressure chamber PC2 on the drive rod 203 side of the drive device 200 and the first pressure chamber PC1 on the side opposite to the rod.

In contrast, in the present modification, instead of making a screw lead of a first hydraulic pressure generation device 110A' (the screw shaft 112' and the nut 113' of a first ball screw 111A') equal to a screw lead of a second hydraulic pressure generation device 120A' (the screw shaft 122' and the nut 123' of a second ball screw 121A'), the pulley ratio of the second driving pulley 155 and the second driven pulley 154' is made different from (is made larger by a predetermined value than) the pulley ratio of the first driving pulley 152 and the first driven pulley 151' in the drive system 150' according to the difference in the cross-sectional area in the direction orthogonal to the axis. Other configurations are the same as those of the second embodiment, and thus redundant description will be omitted.

In FIG. 5C, only a diameter of the driven pulley is changed, but a diameter of one of the driven pulley and the driving pulley may be made different from a diameter of the other of the driven pulley and the driving pulley. Further, the first modification and the second modification may be combined.

Although various embodiments are described above with reference to the drawings, it is needless to say that the present invention is not limited to these examples. It is apparent for those skilled in the art to which the present disclosure belongs that various modified examples or corrected examples are conceivable within the scope recited in the claims, and it is understood that the above falls within the technical scope of the present invention. In addition, the components described in the above embodiments may be combined in any manner without departing from the spirit of the invention.

The present application is based on Japanese Patent Application NO.2023-189183 filed on November 6, 2023 and Japanese Patent Application NO.2023-189184 filed on November 6, 2023, and contents thereof are incorporated herein by reference.

### REFERENCE SIGNS LIST

1, 11, 21 ball screw
2, 12 screw shaft
3, 13 nut
5, 5', 15, 15' piston
6, 16 housing
7, 17 ball bearing
8, 18 bearing holder
9 coupling tool
20 rotation prevention device
23, 23' piston nut
100, 100A hydraulic pressure generation device
110, 110A, 110', 110A' first hydraulic pressure generation device
120, 120A, 120', 120A' second hydraulic pressure generation device
111, 111A, 111', 111A' first ball screw
121, 121A, 121', 121A' second ball screw
112, 112' screw shaft
113, 113' nut
114 ball
115, 115A, 115', 115A' first piston
125, 125A, 125', 125A' second piston
116, 116A first housing
126, 126A second housing
117, 127 rotation prevention device
118, 128 ball bearing
119, 129 coupling tool
150, 150' drive system
200 drive device
202 drive piston
203 drive rod
PB slide bearing
PB1, PB2 slide bearing
SL seal member
SL1 first seal member
SL2 second seal member
SL1' first seal member
SL2' second seal member
SL3 middle seal member
SL4 outer seal member
SL5 middle seal member
SL6 outer seal member
SP variable volume space
SP1 first variable volume space
SP2 second variable volume space

## Claims

1. A hydraulic pressure generation device comprising:
a hollow housing having a cylinder chamber configured to allow hydraulic oil to be injected thereto;
a screw shaft in which a male screw groove is formed;
a nut which is supported movably in an axial direction in the housing and in which a female screw groove is formed;
a plurality of balls accommodated in a rolling path formed by the male screw groove and the female screw groove facing each other; and
a piston slidably disposed in the cylinder chamber and coupled to the nut, wherein
by rotating the screw shaft, the piston moves in the axial direction together with the nut to increase or decrease a volume of a space in the cylinder chamber capable of storing the hydraulic oil.

2. The hydraulic pressure generation device according to claim 1, wherein
a seal member is disposed between an outer periphery of the piston and an inner periphery of the housing, and
a space surrounded by the inner periphery and a bottom wall of the housing and the piston is the space in the cylinder chamber capable of storing the hydraulic oil.

3. The hydraulic pressure generation device according to claim 1, wherein
the housing includes a diameter-enlarged cylindrical portion and a diameter-reduced cylindrical portion having an inner diameter smaller than that of the diameter-enlarged cylindrical portion,
the piston is fitted to an outer periphery of the nut, and includes a thick cylindrical portion disposed radially inside the diameter-enlarged cylindrical portion and a thin cylindrical portion at least a part of which is disposed radially inside the diameter-reduced cylindrical portion,
a first seal member is disposed between an outer periphery of the thick cylindrical portion and an inner periphery of the diameter-enlarged cylindrical portion,
a second seal member is disposed between an outer periphery of the thin cylindrical portion and an inner periphery of the diameter-reduced cylindrical portion, and
a space between the outer periphery of the thin cylindrical portion and the inner periphery of the diameter-enlarged cylindrical portion between the thick cylindrical portion and the diameter-reduced cylindrical portion is the space in the cylinder chamber capable of storing the hydraulic oil.

4. The hydraulic pressure generation device according to claim 3, wherein
an air path establishing communication between an outside of the piston and an air chamber formed in the housing between the second seal member and a bottom wall of the housing is provided in the piston.

5. The hydraulic pressure generation device according to claim 3, wherein
the piston and the nut are integrated.

6. The hydraulic pressure generation device according to claim 1, further comprising:
a rotation prevention device configured to prevent relative rotation between the piston and the housing.

7. The hydraulic pressure generation device according to claim 1, wherein
a slide bearing is disposed between the piston and the housing.

8. The hydraulic pressure generation device according to any of claims 1 to 7, wherein
the housing has a bottomed tube shape, and a bearing that rotatably supports the screw shaft is disposed at an opening end of the housing.

9. A hydraulic pressure operation device comprising:
the hydraulic pressure generation device according to claim 1;
a drive device;
a motor; and
a drive system, wherein
the hydraulic pressure generation device includes a first hydraulic pressure generation device and a second hydraulic pressure generation device,
the first hydraulic pressure generation device includes:
a hollow first housing having a first cylinder chamber configured to allow hydraulic oil to be injected thereto,
a first ball screw including a screw shaft having a male screw groove, a nut having a female screw groove, and a plurality of balls capable of rolling along a rolling path between the male screw groove and the female screw groove, and
a first piston slidably disposed in the first cylinder chamber and coupled to the nut of the first ball screw,
the second hydraulic pressure generation device includes:
a hollow second housing having a second cylinder chamber configured to allow the hydraulic oil to be injected thereto,
a second ball screw including a screw shaft having a male screw groove, a nut having a female screw groove, and a plurality of balls capable of rolling along a rolling path between the male screw groove and the female screw groove, and
a second piston slidably disposed in the second cylinder chamber and coupled to the nut of the second ball screw,
the drive device includes:
a cylindrical case,
a first pressure chamber in the case connected to the first cylinder chamber,
a second pressure chamber in the case connected to the second cylinder chamber,
a drive piston partitioning the first pressure chamber and the second pressure chamber from each other, and
a drive rod extending in an axial direction from the drive piston through the second pressure chamber,
the screw shaft of the first ball screw and the screw shaft of the second ball screw have a common axis, and the first cylinder chamber and the second cylinder chamber are disposed to face each other,
by transmitting a rotary force of the motor to the screw shaft of the first ball screw and the screw shaft of the second ball screw via the drive system, the nut of the first ball screw and the first piston and the nut of the second ball screw and the second piston are displaceable in the same direction with respect to the first cylinder chamber and the second cylinder chamber, respectively, and
a lead of each of the female screw groove and the male screw groove of the first ball screw is smaller than a lead of each of the female screw groove and the male screw groove of the second ball screw by a predetermined value.

10. A hydraulic pressure operation device comprising:
the hydraulic pressure generation device according to claim 1;
a drive device;
a motor; and
a drive system, wherein
the hydraulic pressure generation device includes a first hydraulic pressure generation device and a second hydraulic pressure generation device,
the first hydraulic pressure generation device includes:
a hollow first housing having a first cylinder chamber configured to allow hydraulic oil to be injected thereto,
a first ball screw including a screw shaft having a male screw groove, a nut having a female screw groove, and a plurality of balls capable of rolling along a rolling path between the male screw groove and the female screw groove, and
a first piston slidably disposed in the first cylinder chamber and coupled to the nut of the first ball screw,
the second hydraulic pressure generation device includes:
a hollow second housing having a second cylinder chamber configured to allow the hydraulic oil to be injected thereto,
a second ball screw including a screw shaft having a male screw groove, a nut having a female screw groove, and a plurality of balls capable of rolling along a rolling path between the male screw groove and the female screw groove, and
a second piston slidably disposed in the second cylinder chamber and coupled to the nut of the second ball screw,
the drive device includes:
a cylindrical case,
a first pressure chamber in the case connected to the first cylinder chamber,
a second pressure chamber in the case connected to the second cylinder chamber,
a drive piston partitioning the first pressure chamber and the second pressure chamber from each other, and
a drive rod extending in an axial direction from the drive piston through the second pressure chamber,
the screw shaft of the first ball screw and the screw shaft of the second ball screw have a common axis, and the first cylinder chamber and the second cylinder chamber are disposed to face each other,
by transmitting a rotary force of the motor to the screw shaft of the first ball screw and the screw shaft of the second ball screw via the drive system, the nut of the first ball screw and the first piston and the nut of the second ball screw and the second piston are displaceable in the same direction with respect to the first cylinder chamber and the second cylinder chamber, respectively,
the drive system includes a first belt coupling a pulley coupled to a rotary shaft of the motor and a pulley coupled to the screw shaft of the first ball screw and a second belt coupling a pulley coupled to the rotary shaft of the motor and a pulley coupled to the screw shaft of the second ball screw, and
a pulley ratio between the two pulleys engaged with the first belt is smaller than a pulley ratio between the two pulleys engaged with the second belt by a predetermined value.

11. The hydraulic pressure operation device according to claim 9 or 10, wherein
a first seal member is disposed between an outer periphery of the first piston and an inner periphery of the first housing having a bottomed tube shape,
a space surrounded by the inner periphery and a bottom wall of the first housing and the first piston is a space in the first cylinder chamber capable of storing the hydraulic oil,
a second seal member is disposed between an outer periphery of the second piston and an inner periphery of the second housing having a bottomed tube shape, and
a space surrounded by the inner periphery and a bottom wall of the second housing and the second piston is a space in the second cylinder chamber capable of storing the hydraulic oil.

12. The hydraulic pressure operation device according to claim 9 or 10, wherein
the first housing has a bottomed tube shape and includes a diameter-enlarged cylindrical portion and a diameter-reduced cylindrical portion having an inner diameter smaller than that of the diameter-enlarged cylindrical portion,
the first piston is fitted to an outer periphery of the nut of the first ball screw, and includes a thick cylindrical portion disposed radially inside the diameter-enlarged cylindrical portion of the first housing and a thin cylindrical portion at least a part of which is disposed radially inside the diameter-reduced cylindrical portion,
a middle seal member is disposed between an outer periphery of the thick cylindrical portion and an inner periphery of the diameter-enlarged cylindrical portion,
an outer seal member is disposed between an outer periphery of the thin cylindrical portion and an inner periphery of the diameter-reduced cylindrical portion, and
a space between the outer periphery of the thin cylindrical portion and the inner periphery of the diameter-enlarged cylindrical portion between the thick cylindrical portion and the diameter-reduced cylindrical portion is the space in the first cylinder chamber capable of storing the hydraulic oil.

13. The hydraulic pressure operation device according to claim 12, wherein
a first air chamber is provided between the first piston and a bottom wall of the first housing, and
an air path establishing communication between the first air chamber and an outside of the first piston is provided in the first piston.

14. The hydraulic pressure operation device according to claim 9 or 10, wherein
the second housing has a bottomed tube shape and includes a diameter-enlarged cylindrical portion and a diameter-reduced cylindrical portion having an inner diameter smaller than that of the diameter-enlarged cylindrical portion,
the second piston is fitted to an outer periphery of the nut of the second ball screw, and includes a thick cylindrical portion disposed radially inside the diameter-enlarged cylindrical portion of the second housing and a thin cylindrical portion at least a part of which is disposed radially inside the diameter-reduced cylindrical portion,
a middle seal member is disposed between an outer periphery of the thick cylindrical portion and an inner periphery of the diameter-enlarged cylindrical portion,
an outer seal member is disposed between an outer periphery of the thin cylindrical portion and an inner periphery of the diameter-reduced cylindrical portion, and
a space between the outer periphery of the thin cylindrical portion and the inner periphery of the diameter-enlarged cylindrical portion between the thick cylindrical portion and the diameter-reduced cylindrical portion is the space in the second cylinder chamber capable of storing the hydraulic oil.

15. The hydraulic pressure operation device according to claim 14, wherein
a second air chamber is provided between the second piston and a bottom wall of the second housing, and
an air path establishing communication between the second air chamber and an outside of the second piston is provided in the second piston.

16. The hydraulic pressure operation device according to claim 9 or 10, further comprising:
a rotation prevention device configured to prevent relative rotation between the first piston and the first housing; and
a rotation prevention device configured to prevent relative rotation between the second piston and the second housing.

17. The hydraulic pressure operation device according to claim 9 or 10, wherein
a slide bearing is disposed between the first piston and the first housing, and a slide bearing is disposed between the second piston and the second housing.
